# EUROPEAN PATENT APPLICATION

(11) **EP 3 984 613 A1**
(43) Date of publication of application: **20.04.2022**
(21) Application number: 20851086.7
(22) Date of filing: 22.07.2020
(51) Int. Cl.: B01D 11/04, B01J 19/00

(54) **INTERACTION SYSTEM AND INTERACTION METHOD**

(30) Priority: 02.08.2019 JP 2019143289; 12.03.2020 JP 2020042734
(71) Applicant: KABUSHIKI KAISHA KOBE SEIKO SHO (KOBE STEEL, LTD.), Hyogo 651-8585 (JP)
(72) Inventor: MATSUOKA, Akira, Kobe-shi, Hyogo 651-2271 (JP); NOISHIKI, Koji, Takasago-shi, Hyogo 676-8670 (JP); ICHIHASHI, Nobumasa, Takasago-shi, Hyogo 676-8670 (JP)
(74) Representative: TBK
(86) International application number: PCT/JP2020/028553
(87) International publication number: WO 2021/024820

(57) **Abstract**

The interaction system includes: an interaction unit internally including a process flow path that allows a first fluid and a second fluid to flow through the process flow path so as to come into contact and interact with each other; a separation container connected to an outlet of the process flow path so as to receive a mixed fluid of the first fluid and the second fluid discharged from the outlet of the process flow path to retain the received mixed fluid to separate the mixed fluid into the first fluid and the second fluid; a first fluid supply device configured to supply the first fluid to an inlet of the process flow path; a second fluid path connecting a region, where the separated second fluid is accumulated, of the separation container and the inlet of the process flow path so as to guide the second fluid separated in the separation container to the inlet of the process flow path; and a second fluid feed pump provided on the second fluid path to send the second fluid separated in the separation container from the separation container to the inlet of the process flow path.

## Description

### Technical Field

The present invention relates to an interaction system and an interaction method for causing an interaction between a plurality of fluids.

### Background Art

Conventionally, an interaction system for causing an interaction between a plurality of fluids is known. As an example of such an interaction system, Patent Literature 1 discloses an extraction apparatus that brings an extractant and a raw material fluid into contact with each other to extract a specific component from the raw material fluid and transport the specific component into the extractant.

The extraction apparatus disclosed in Patent Literature 1 includes a plurality of stages of extraction units connected in series so that the raw material fluid flows sequentially through the extraction units, and extraction of the specific component from the raw material fluid by the extractant is performed in each extraction unit. In this extraction apparatus, the raw material fluid from which the specific component has been extracted in the extraction unit in the previous stage is supplied to the extraction unit in the next stage.

Each of the extraction units of a plurality of stages includes a flow path structure that internally has a plurality of flow paths. A plurality of flow paths allow the extractant and the raw material fluid to flow therethrough in a contact state with each other. As the extractant and the raw material fluid flow, the specific component is extracted from the raw material fluid and transported into the extractant. A discharge header is attached to an outer surface of the flow path structure, and an outlet of each of a plurality of flow paths communicates with an internal space of the discharge header. Thus, the mixed fluid of the extractant and the raw material fluid flowing through each flow path is discharged from the outlet of the flow path to the internal space of the discharge header, and the mixed fluid is separated into the extractant and the raw material fluid by the difference in specific gravity in the internal space. A portion of the discharge header of the extraction unit of each stage where the separated raw material fluid is accumulated is connected to the flow path of the extraction unit of the next stage via a pipe.

A raw material liquid supply pump is connected to the extraction unit located most upstream in the flow direction of the raw material fluid. By the raw material liquid supply pump sending out the raw material fluid, the raw material fluid is sequentially sent from the upstream extraction unit to the downstream extraction unit. An extractant supply pump is connected in parallel to a plurality of stages of extraction units. The extractant is supplied from the extractant supply pump to the extraction unit of each stage in parallel. In the extraction unit of each stage, the supplied extractant and the raw material fluid are introduced into the flow path and merge with each other, and as the extractant and the raw material fluid flow in a contact state with each other, the specific component is extracted from the raw material fluid as described above.

In a conventional interaction system, a raw material fluid sequentially flows from the upstream to a plurality of stages of interaction units (the extraction units in Patent Literature 1), and an interaction process (the extraction process in Patent Literature 1) is performed in each interaction unit. In this manner, a fluid progressively subjected to the process is eventually obtained. However, this conventional interaction system has an aspect that the interaction system is complicated due to a large number of interaction units.

In addition, in the conventional interaction system, the total pressure loss of the flow paths in all the interaction units takes a larger value for a larger number of the interaction units. Thus, there is an aspect that the lifting height of the raw material liquid supply pump and the extractant supply pump required to flow the raw material fluid and the extractant through the flow paths of all the interaction units becomes higher, and the required power for the raw material liquid supply pump and the extractant supply pump becomes larger.

### Citation List

### Patent Literature

Patent Literature 1: JP 5988504 B2

### Summary of Invention

An object of the present invention is to provide an interaction system capable of continuously performing an interaction process a plurality of times in the system while suppressing the interaction system from becoming complicated and reducing the lifting height and the required power of a pump for supplying a fluid to an interaction unit, and an interaction method using the interaction system.

An interaction system according to an aspect of the present invention is an interaction system that causes an interaction between a first fluid and a second fluid. This interaction system includes an interaction unit internally including a process flow path that allows the first fluid and the second fluid to flow through process flow path so as to come into contact and interact with each other, a separation container connected to an outlet of the process flow path so as to receive a mixed fluid of the first fluid and the second fluid discharged from the outlet of the process flow path to retain the received mixed fluid to separate the mixed fluid into the first fluid and the second fluid, a first fluid supply device configured to supply the first fluid to an inlet of the process flow path, a second fluid path connecting a region of the separation container and the inlet of the process flow path so as to guide the second fluid separated in the separation container to the inlet of the process flow path, the region of the separation container being a region where the separated second fluid is accumulated, and a second fluid feed pump provided on the second fluid path to send the second fluid separated in the separation container from the separation container to the inlet of the process flow path.

An interaction method according to another aspect of the present invention is an interaction method for causing an interaction between a first fluid and a second fluid. This interaction method includes causing the first fluid and the second fluid to flow in a contact state with each other through a process flow path in an interaction unit to cause the interaction between the first fluid and the second fluid, introducing a mixed fluid of the first fluid and the second fluid flowing out from an outlet of the process flow path into a separation container, and then retaining the mixed fluid in the separation container to separate the mixed fluid into the first fluid and the second fluid, supplying the first fluid to an inlet of the process flow path, and sending the second fluid separated in the separation container to the inlet of the process flow path through a second fluid path by a second fluid feed pump provided on the second fluid path connecting a region of the separation container and the inlet of the process flow path, the region of the separation container being a region where the separated second fluid is accumulated.

### Brief Description of Drawings

FIG. 1 is a schematic diagram of an interaction system according to a first embodiment of the present invention.
FIG. 2 is a schematic diagram for explaining an extraction method using the interaction system according to the first embodiment.
FIG. 3 is a schematic diagram for explaining the extraction method using the interaction system according to the first embodiment.
FIG. 4 is a schematic diagram for explaining the extraction method using the interaction system according to the first embodiment.
FIG. 5 is a schematic diagram for explaining the extraction method using the interaction system according to the first embodiment.
FIG. 6 is a schematic diagram of an interaction system according to a second embodiment of the present invention.
FIG. 7 is a schematic diagram for explaining an extraction method using the interaction system according to the second embodiment.
FIG. 8 is a schematic diagram for explaining the extraction method using the interaction system according to the second embodiment.
FIG. 9 is a schematic diagram for explaining the extraction method using the interaction system according to the second embodiment.
FIG. 10 is a schematic diagram for explaining the extraction method using the interaction system according to the second embodiment.
FIG. 11 is a schematic diagram of an interaction system according to a third embodiment of the present invention.
FIG. 12 is a schematic diagram for explaining an extraction method using the interaction system according to the third embodiment.
FIG. 13 is a schematic diagram for explaining the extraction method using the interaction system according to the third embodiment.
FIG. 14 is a schematic diagram for explaining the extraction method using the interaction system according to the third embodiment.
FIG. 15 is a schematic diagram for explaining the extraction method using the interaction system according to the third embodiment.
FIG. 16 is a schematic diagram for explaining the extraction method using the interaction system according to the third embodiment.
FIG. 17 is a schematic diagram of an interaction system according to a fourth embodiment of the present invention.
FIG. 18 is a schematic diagram of an interaction system according to a first modification that is a modification of the first embodiment.
FIG. 19 is a schematic diagram for explaining an extraction method using the interaction system according to the first modification.
FIG. 20 is a schematic diagram of an interaction system according to a second modification that is a modification of the second embodiment.
FIG. 21 is a schematic diagram for explaining an extraction method using the interaction system according to the second modification.
FIG. 22 is a schematic diagram for explaining the extraction method using the interaction system according to the second modification.
FIG. 23 is a schematic diagram of an interaction system according to a third modification that is a further modification of the first modification.
FIG. 24 is a schematic diagram for explaining an extraction method using the interaction system according to the third modification.
FIG. 25 is a schematic diagram of an interaction system according to a fourth modification that is a further modification of the second modification.
FIG. 26 is a schematic diagram for explaining an extraction method using the interaction system according to the fourth modification.

### Description of Embodiments

Embodiments of the present invention will now be described with reference to the drawings.

### (First Embodiment)

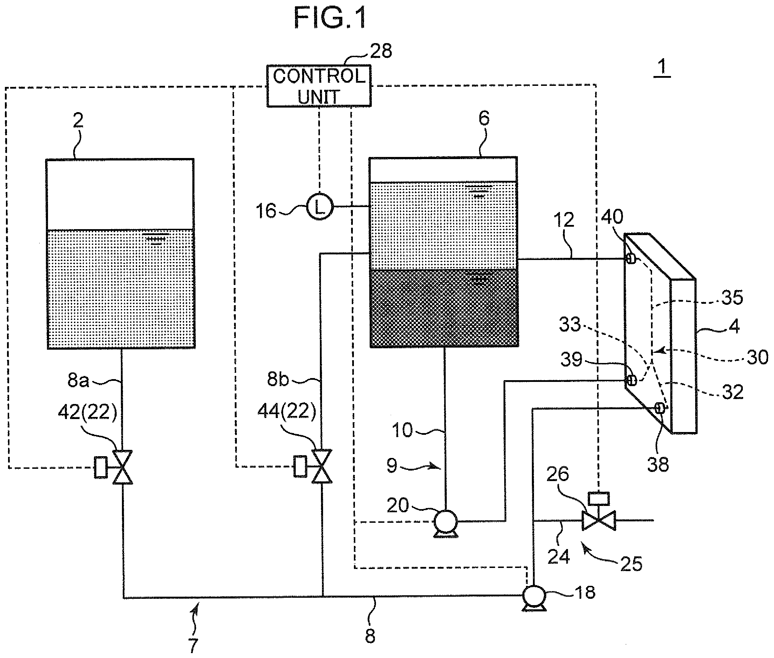

FIG. 1 illustrates an overall configuration of an interaction system 1 according to a first embodiment of the present invention. The interaction system 1 according to the first embodiment performs, as an example of interaction, an extraction process of extracting a specific component from a raw material liquid and transporting the specific component into an extractant. The extractant is an example of a first fluid in the present invention, and the raw material liquid is an example of a second fluid in the present invention. The extractant is a liquid incompatible with the raw material liquid. The specific gravity of the extractant used in the first embodiment is smaller than the specific gravity of the raw material liquid.

There are various exemplary extraction processes, and various combinations of the raw material liquid and the extractant for each exemplary extraction process. For example, an exemplary extraction process is a process of extracting and separating a specific metal component from an aqueous solution in which valuable metals are dissolved. In such a process, the aqueous solution in which valuable metals are dissolved is a raw material liquid. An example of such an aqueous solution is an aqueous solution in which rare metals such as Ni and Co are dissolved. As an extractant for extracting rare metals such as Ni and Co from such an aqueous solution, for example, a liquid obtained by diluting PC 88A manufactured by DAIHACHI CHEMICAL INDUSTRY CO., LTD. with kerosene is used. Another exemplary extraction process is a process of extracting a metal component dissolved as a synthesis catalyst in a liquid that has been subjected to a polymer synthesis reaction from the liquid and separately removing the metal. In this process, the liquid that has been subjected to the polymer synthesis reaction is a raw material liquid, and water, for example, is used as an extractant for extracting the metal component as a specific component from the liquid.

As illustrated in FIG. 1, the interaction system 1 according to the first embodiment includes an interaction unit 4, a separation container 6, a first supply device 7, a second supply device 9, a connection pipe 12, a level meter 16, a discharge unit 25, and a control unit 28.

The interaction unit 4 brings fluids into contact with each other to cause an interaction, and performs an extraction process in the first embodiment. The interaction unit 4 internally includes a large number of process flow paths 30. Each of the process flow paths 30 allows the extractant and the raw material liquid to flow such that the extractant and the raw material liquid are in contact with each other, a specific component is extracted from the raw material liquid, and the specific component is transported into the extractant. Note that, in each of the drawings, a large number of process flow paths 30 in the interaction unit 4 are simply represented by one flow path, and the shape of the flow path is also simply represented. Thus, the number and arrangement of the process flow paths 30 provided in the interaction unit 4 and the shape of each process flow path 30 are arbitrarily set according to the condition of the interaction process.

Each of the process flow paths 30 is a microchannel. Each of the process flow paths 30 includes: a first introduction path 32 into which the extractant supplied to the interaction unit 4 is introduced; a second introduction path 33 into which the raw material liquid supplied to the interaction unit 4 is introduced; and a process flow path section 35 connected to downstream ends of the first and second introduction paths 32 and 33 such that the extractant flows in from the first introduction path 32 and the raw material liquid flows in from the second introduction path 33, and the extractant flowing in from the first introduction path 32 and the raw material liquid flowing in from the second introduction path 33 flow in a contact state with each other to cause the extraction process.

The interaction unit 4 includes: a first inlet 38 connected to the first introduction paths 32 of all the process flow paths 30 provided in the interaction unit 4; a second inlet 39 connected to the second introduction paths 33 of all the process flow paths 30; and an outlet 40 connected to the downstream ends of the process flow path sections 35 of all the process flow paths 30. The first inlet 38 is a part that receives the extractant supplied to the interaction unit 4. The extractant passing through the first inlet 38 is distributed and flows to the first introduction paths 32. The second inlet 39 is a part that receives the raw material liquid supplied to the interaction unit 4. The raw material liquid passing through the second inlet 39 is distributed and flows to the second introduction paths 33. The outlet 40 is a part that allows the extractant and the raw material liquid that have flown through the process flow path section 35 of each process flow path 30 and have been subjected to the extraction process to flow to the outside of the interaction unit 4. The first inlet 38 and the second inlet 39 are examples of the inlet of the process flow path in the present invention, and the outlet 40 is an example of the outlet of the process flow path in the present invention.

The separation container 6 is connected to the outlet 40 so as to receive the mixed fluid of the extractant and the raw material liquid that have been subjected to the extraction process and flown out of the process flow path section 35 of each process flow path 30, that is, the mixed fluid discharged from the outlet 40. In the separation container 6, the received mixed fluid is retained and separated into the extractant and the raw material liquid by the difference in specific gravity.

Specifically, the separation container 6 is connected to the outlet 40 via a connection pipe 12. The separation container 6 receives, through the connection pipe 12, the mixed fluid discharged from the outlet 40. In a space in the separation container 6, the mixed fluid is vertically separated into a light liquid (extractant) and a heavy liquid (raw material liquid). The separated heavy liquid (raw material liquid) accumulates at the bottom in the separation container 6, and the separated light liquid (extractant) accumulates on the accumulated heavy liquid. A boundary face is formed between the light liquid and the heavy liquid.

In the first embodiment, the separation container 6 also functions as a tank that stores an unprocessed raw material liquid that has not yet subjected to the extraction process (hereinafter, simply referred to as an unprocessed raw material liquid). That is, in the first embodiment, the separation container 6 functions as a tank that stores the unprocessed raw material liquid before the extraction process starts in the interaction system 1, and functions as a container for separating the mixed fluid into the extractant and the raw material liquid after the start of the extraction process and receiving of the mixed fluid.

The first supply device 7 is a device that supplies the extractant to the first inlet 38 of the interaction unit 4. The first supply device 7 is an example of a first fluid supply device in the present invention. The first supply device 7 includes an extractant tank 2, an extractant supply pipe 8, a first pump 18, and a supply switching device 22.

The extractant tank 2 is a tank that stores an unused extractant which is the extractant having not yet used for the extraction process. The extractant tank 2 is an example of a first fluid tank in the present invention. The unused extractant is an example of an unused first fluid in the present invention.

The extractant supply pipe 8 connects a region, where the separated extractant (light liquid) is accumulated, of the separation container 6 and the first inlet 38 so as to guide the extractant separated in the separation container 6 to the first inlet 38 of the interaction unit 4. The extractant supply pipe 8 connects the extractant tank 2 and the first inlet 38 so as to guide the unused extractant stored in the extractant tank 2 to the first inlet 38 of the interaction unit 4. The extractant supply pipe 8 is an example of a first fluid path in the present invention.

Specifically, the extractant supply pipe 8 includes a first branch pipe 8a connected to the extractant tank 2, and a second branch pipe 8b connected to the region, where the separated extractant (light liquid) is accumulated, of the separation container 6. The unused extractant stored in the extractant tank 2 flows into the first branch pipe 8a and can be supplied to the first inlet 38 through the extractant supply pipe 8. The extractant (light liquid) separated in the separation container 6 flows into the second branch pipe 8b and can be supplied to the first inlet 38 through the extractant supply pipe 8.

The first pump 18 is provided on the extractant supply pipe 8 at a location closer to the interaction unit 4 than the branch point between the first branch pipe 8a and the second branch pipe 8b, that is, at a location downstream of the branch point in the flow direction of the extractant on the extractant supply pipe 8. The first pump 18 sends the extractant (light liquid) separated in the separation container 6 from the separation container 6 to the first inlet 38 through the extractant supply pipe 8, and sends the unused extractant stored in the extractant tank 2 from the extractant tank 2 to the first inlet 38 through the extractant supply pipe 8. The first pump 18 is an example of a first fluid feed pump in the present invention.

The supply switching device 22 is provided on the extractant supply pipe 8. The supply switching device 22 is adapted for switching the supply source of the extractant sent to the first inlet 38 by the first pump 18 from one of the extractant tank 2 and the separation container 6 to the other. The supply switching device 22 is configured to be switchable between a state for supplying the unused extractant and a state for supplying the separated extractant. The state for supplying the unused extractant is a state of allowing the unused extractant to flow from the extractant tank 2 to the first inlet 38 through the extractant supply pipe 8 and preventing the extractant (light liquid) separated in the separation container 6 from flowing from the separation container 6 to the first inlet 38 through the extractant supply pipe 8. The state for supplying the separated extractant is a state of allowing the extractant (light liquid) separated in the separation container 6 to flow from the separation container 6 to the first inlet 38 through the extractant supply pipe 8 and preventing the unused extractant from flowing from the extractant tank 2 to the first inlet 38 through the extractant supply pipe 8.

Specifically, the supply switching device 22 includes a first supply switching valve 42 and a second supply switching valve 44.

The first supply switching valve 42 is provided on the first branch pipe 8a of the extractant supply pipe 8. The first supply switching valve 42 is configured to be switchable between an open state of allowing the unused extractant to be supplied from the extractant tank 2 to the first inlet 38 through the extractant supply pipe 8, and a closed state preventing supply of the unused extractant.

The second supply switching valve 44 is provided on the second branch pipe 8b of the extractant supply pipe 8. The second supply switching valve 44 is configured to be switchable between an open state of allowing the extractant (light liquid) separated in the separation container 6 to be supplied from the separation container 6 to the first inlet 38 through the extractant supply pipe 8, and a closed state preventing supply of the extractant (light liquid).

The state for supplying the unused extractant of the supply switching device 22 is a state in which the first supply switching valve 42 is in the open state and the second supply switching valve 44 is in the closed state. The state for supplying the separated extractant of the supply switching device 22 is a state in which the first supply switching valve 42 is in the closed state and the second supply switching valve 44 is in the open state.

The second supply device 9 is a device that supplies the raw material liquid to the second inlet 38 of the interaction unit 4. The second supply device 9 includes a raw material liquid supply pipe 10 and a second pump 20.

The raw material liquid supply pipe 10 connects a region, where the separated raw material liquid (heavy liquid) is accumulated, of the separation container 6 and the second inlet 39 so as to guide the raw material liquid separated in the separation container 6 to the second inlet 39 of the interaction unit 4. Through the period from the start of operation of the interaction system 1 to the time in which separation is performed in the separation container 6, the raw material liquid supply pipe 10 guides the unprocessed raw material liquid stored in the separation container 6 to the second inlet 39 of the interaction unit 4. The raw material liquid supply pipe 10 is an example of a second fluid path in the present invention.

The second pump 20 is provided on the raw material liquid supply pipe 10. The second pump 20 sends the raw material liquid (heavy liquid) separated in the separation container 6 from the separation container 6 to the second inlet 39 through the raw material liquid supply pipe 10. Through the period from the start of operation of the interaction system 1 to the time in which separation is performed in the separation container 6, the second pump 20 sends the unprocessed raw material liquid stored in the separation container 6 to the second inlet 39. The second pump 20 is an example of a second fluid feed pump in the present invention.

The level meter 16 is attached to the separation container 6. The level meter 16 detects the height level of the upper surface of the liquid accumulated in the separation container 6. In a state where the vertically separated light liquid and heavy liquid are accumulated in the separation container 6, the level meter 16 detects the height level of the uppermost surface of the liquids, that is, the height level of the upper surface of the light liquid. The level meter 16 transmits the information on the detected height level of the upper surface of the liquid to the control unit 28.

The discharge unit 25 is connected to the extractant supply pipe 8. The discharge unit 25 is adapted for discharging the extractant to the outside of the interaction system 1 from the extractant supply pipe 8 when, as a result of the extraction process repeatedly performed in each process flow path 30 while the extractant circulates between each process flow path 30 and the separation container 6, the extraction ability of the extractant has decreased due to an increase in the concentration of the specific component contained in the extractant. Note that the extraction ability is an example of the ability to cause interaction in the present invention. The discharge unit 25 is configured to switch between a discharge state of discharging the extractant from the extractant supply pipe 8 to the outside of the interaction system 1 and a discharge prevention state of preventing discharge of the extractant.

Specifically, the discharge unit 25 includes a discharge pipe 24 and a discharge valve 26.

The discharge pipe 24 is connected to the extractant supply pipe 8 at a location closer to the interaction unit 4 than the first pump 18, that is, at a location downstream of the first pump 18 in the flow direction of the extractant on the extractant supply pipe 8.

The discharge valve 26 is provided on the discharge pipe 24. The discharge valve 26 is configured to be switchable between an open state of allowing the extractant to be discharged to the outside of the interaction system 1 through the discharge pipe 24 and a closed state preventing discharge of the extractant. The discharge unit 25 is set to the discharge state by setting the discharge valve 26 to the open state, and to the discharge prevention state by setting the discharge valve 26 to the closed state.

The control unit 28 performs a switching control of opening and closing each of the first supply switching valve 42, the second supply switching valve 44, and the discharge valve 26, and controls the operation of each of the first pump 18 and the second pump 20. The control unit 28 acquires the information on the height level of the upper surface of the liquid in the separation container 6 transmitted from the level meter 16. Specific contents of the switching control of opening and closing the first supply switching valve 42, the second supply switching valve 44, and the discharge valve 26 and the control of the operation of the first and second pumps 18 and 20 performed by the control unit 28 will be described in the following description on an interaction method (extraction method).

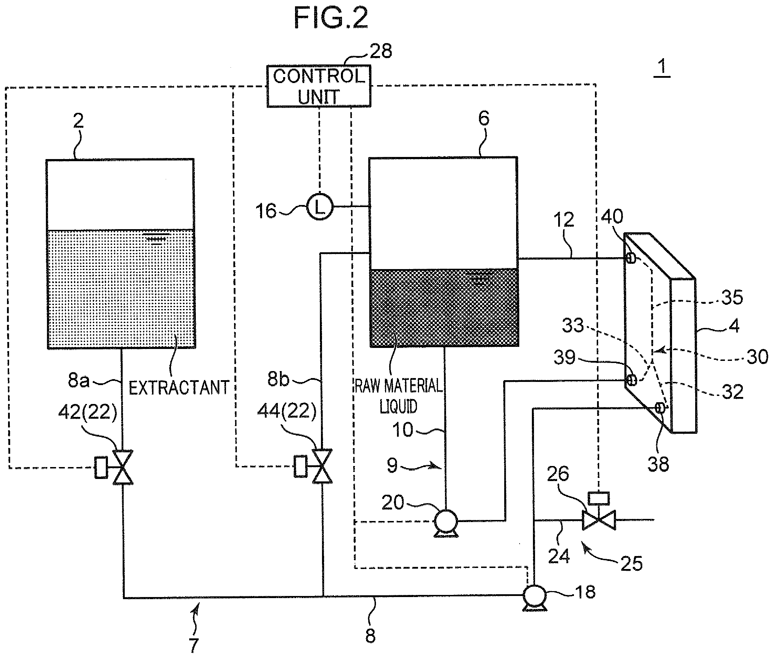

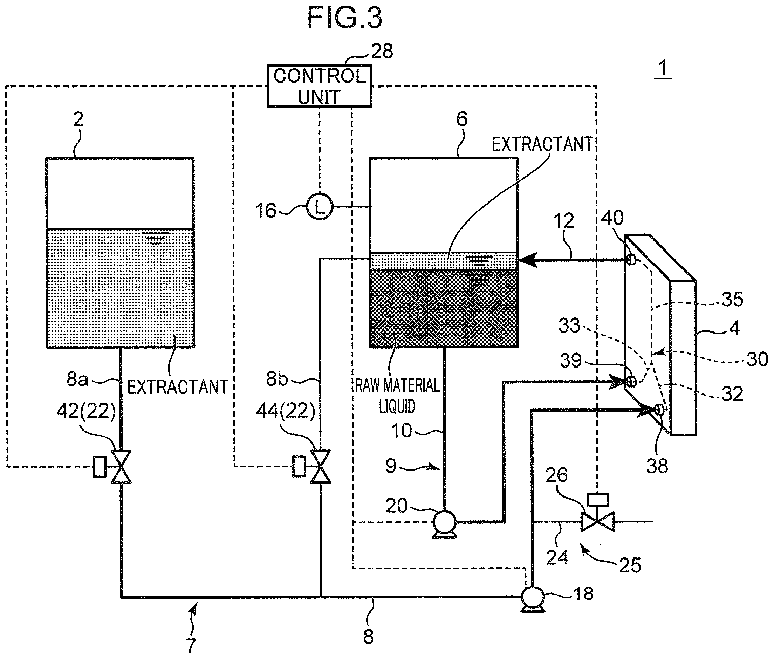

Next, an interaction method using the interaction system 1 according to the first embodiment, specifically, an extraction method of extracting the specific component from the raw material liquid and transporting the specific component into the extractant will be described with reference to FIGS. 2 to 5. In FIGS. 3 to 5, flow paths that allow the raw material liquid and/or the extractant to flow though the flow paths are indicated by thick lines.

First, before the start of the extraction process, the unused extractant is stored in the extractant tank 2, and the unprocessed raw material liquid is stored in the separation container 6 (see FIG. 2). Both the first supply switching valve 42 and the second supply switching valve 44 are in the closed state. The discharge valve 26 is also in the closed state.

Then, the extraction process starts in the interaction system 1. Specifically, the control unit 28 sets the first supply switching valve 42 to the open state and operates the first pump 18, and the unused extractant is sent from the extractant tank 2 to the first inlet 38 of the interaction unit 4 by the first pump 18. The control unit 28 operates the second pump 20, and the unprocessed raw material liquid is sent from the separation container 6 to the second inlet 39 of the interaction unit 4 by the second pump 20.

The extractant sent to the first inlet 38 flows into the first introduction path 32 of the process flow paths 30. The raw material liquid sent to the second inlet 39 flows into the second introduction path 33 of the process flow paths 30. Then, in each of the process flow paths 30, the extractant flows into the process flow path section 35 from the first introduction path 32, the raw material liquid flows into the process flow path section 35 from the second introduction path 33, and the extractant and the raw material liquid flow through the process flow path section 35 in a contact state with each other. As the extractant and the raw material liquid flow through the process flow path section 35, the extraction process in which the specific component is extracted from the raw material liquid and transported into the extractant is performed. The mixed fluid of the extractant and the raw material liquid that have been subjected to the extraction process flows out from the outlet 40 of the interaction unit 4 and is introduced into the separation container 6 through the connection pipe 12.

The mixed fluid introduced into the separation container 6 is retained in the separation container 6, and is vertically separated into a light liquid (extractant) and a heavy liquid (raw material liquid) by the difference in specific gravity as illustrated in FIG. 3. The heavy liquid (raw material liquid) is sent from the separation container 6 to the second inlet 39 of the interaction unit 4 through the raw material liquid supply pipe 10 by the second pump 20, and flows into the process flow paths 30. That is, the raw material liquid circulates between the separation container 6 and the process flow paths 30.

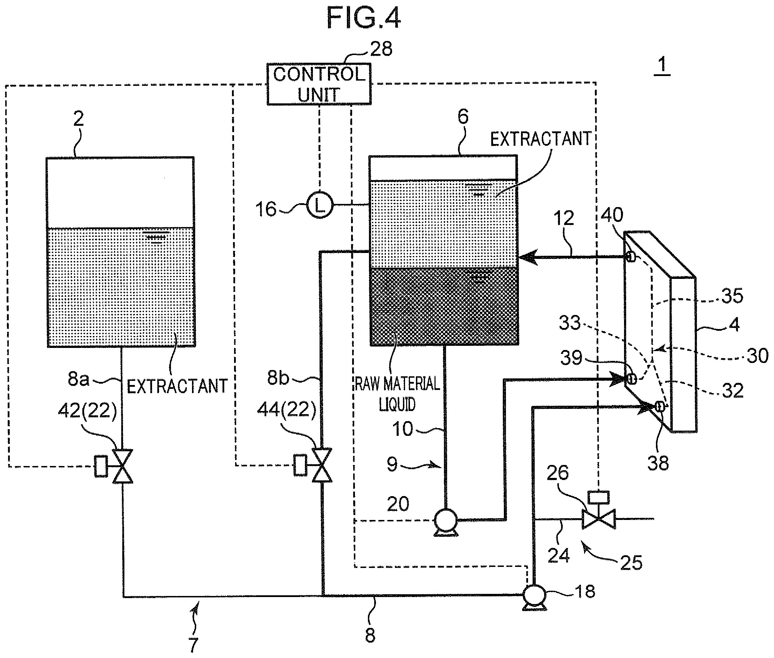

As time passes, the amount of the light liquid (extractant) accumulated in the separation container 6 increases. As illustrated in FIG. 4, when the amount of the extractant accumulated in the separation container 6 reaches a predetermined amount, the control unit 28 switches the second supply switching valve 44 to the open state and the first supply switching valve 42 to the closed state. Specifically, the control unit 28 switches the first supply switching valve 42 to the closed state and the second supply switching valve 44 to the open state at a timing when the control unit 28 determines that the height level of the upper surface of the liquid (the upper surface of the extractant as a light liquid) accumulated in the separation container 6 exceeds a preset specific height level based on the information acquired from the level meter 16.

The specific height level is arbitrarily set according to the amount of the extractant to be brought into contact with the raw material liquid in the process flow paths 30. Specifically, the volume ratio between the raw material liquid and the extractant to be brought into contact with the raw material liquid is determined in advance. A height corresponding to the volume ratio is obtained with respect to the height of the raw material liquid (heavy liquid) (height from the bottom surface in the separation container 6 to the upper surface of the raw material liquid) stored in the separation container 6 before the start of the extraction process. The obtained height is added to the height of the raw material liquid (heavy liquid) stored in the separation container 6. The specific height level is set to a level corresponding to the height calculated in this manner.

Switching the first supply switching valve 42 to the closed state stops the supply of the extractant from the extractant tank 2 to the process flow paths 30 of the interaction unit 4. Instead, switching the second supply switching valve 44 to the open state causes the extractant separated in the separation container 6 to be sent to the first inlet 38 by the first pump 18 and then supplied to the process flow paths 30. Thereafter, the extractant circulates between the separation container 6 and the process flow paths 30. Accordingly, as illustrated in FIG. 4, both the extractant and the raw material liquid circulate between the separation container 6 and the process flow paths 30 of the interaction unit 4, whereby extraction of the specific component from the raw material liquid in the process flow path sections 35 of the process flow paths 30 and separation of the mixed fluid into the extractant (light liquid) and the raw material liquid (heavy liquid) in the separation container 6 are repeatedly performed. As a result, extraction of the specific component from the raw material liquid progresses, the concentration of the specific component in the raw material liquid decreases, and the concentration of the specific component in the extractant increases.

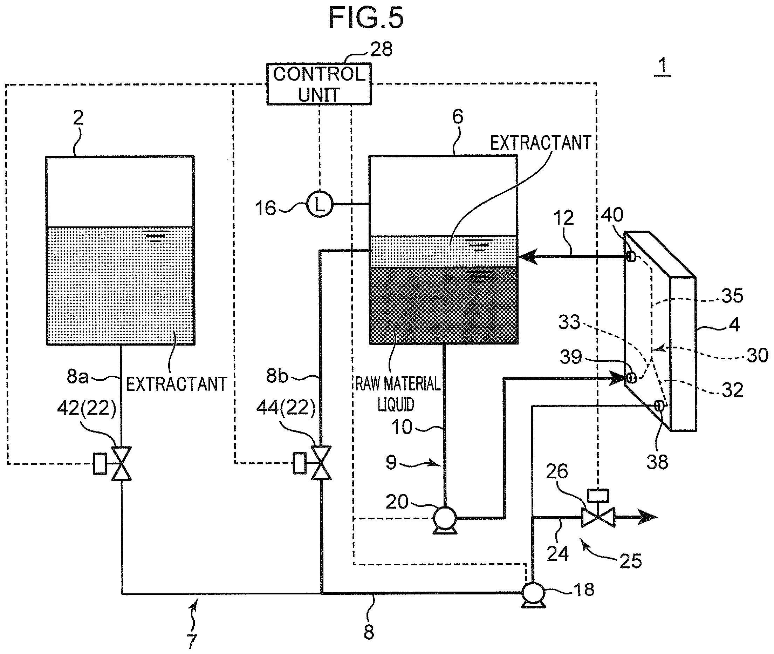

Then, the control unit 28 switches the discharge valve 26 to the open state at a timing when a predetermined time elapses from a timing at which the extractant has started circulating between the separation container 6 and the process flow paths 30 (a timing at which the second supply switching valve 44 is switched to the open state). The predetermined time is a time during which the extraction ability of the extractant repeatedly used for the extraction process in the process flow paths 30 decreases to a desired degree or less after the extractant has started circulating. By switching the discharge valve 26 to the open state, as illustrated in FIG. 5, the extractant (light liquid) sent from the separation container 6 in the direction to the first inlet 38 by the first pump 18 is discharged to the outside of the interaction system 1 through the discharge pipe 24. That is, the extractant having an increased concentration of the specific component as described above is discharged to the outside of the interaction system 1. Accordingly, the amount of the extractant in the separation container 6 decreases.

Then, the control unit 28 switches the discharge valve 26 to the closed state when the discharge amount of the extractant reaches a predetermined amount. Specifically, the control unit 28 switches the discharge valve 26 to the closed state at a timing when the control unit 28 determines that the upper surface of the liquid (the upper surface of the light liquid) in the separation container 6 has descended to a preset discharge stop height level based on the information acquired from the level meter 16. This stops discharge of the extractant.

The lower limit of the discharge stop height level is the height level of the connection of the second branch pipe 8b of the extractant supply pipe 8 to the separation container 6. The discharge stop height level is set higher than the height level of the connection of the second branch pipe 8b according to the percentage of replacing the extractant (heavy liquid) that has been used for the extraction process in the separation container 6 with the unused extractant. That is, the discharge stop height level is set to a low level when the percentage of replacing the extractant in the separation container 6 with the unused extractant is large, and to a high level when the percentage of replacing the extractant in the separation container 6 with the unused extractant is small.

Then, the control unit 28 switches the first supply switching valve 42 to the open state and switches the second supply switching valve 44 to the closed state. As a result, the unused extractant is supplied from the extractant tank 2 to the process flow paths 30 of the interaction unit 4. Then, the process described above is repeatedly performed.

### (Effect According to First Embodiment)

In a first embodiment, by circulating the extractant and the raw material liquid between the separation container 6 and the process flow paths 30 of the interaction unit 4, the extraction process of extracting the specific component from the raw material liquid and transporting the specific component into the extractant in the process flow paths 30 can be repeatedly performed. Thus, the extraction process can be continuously performed a plurality of times without increasing the number of interaction units, and can suppress the interaction system 1 from becoming complicated. That is, while suppressing the interaction system 1 from becoming complicated, the extraction can be performed a plurality of times which is equivalent to multi-stage extraction, and the rate of extracting the specific component from the raw material liquid can be raised.

In addition, in the first embodiment, since the first and second pumps 18 and 20 need to have a lifting height only necessary for flowing the extractant and the raw material liquid to the process flow paths 30 in one interaction unit 4, the lifting height of the first and second pumps 18 and 20 can be reduced as compared with the case of flowing the fluid to the flow paths of a plurality of stages of interaction units as in the conventional interaction system. Accordingly, the required power of the first and second pumps 18 and 20 can also be reduced.

Furthermore, in the first embodiment, the number of times the extraction process is performed can be changed by appropriately changing the timing at which the control unit 28 switches the discharge valve 26 to the open state to change the number of times of circulation of the extractant and the raw material liquid between the separation container 6 and the process flow paths 30. Thus, in the first embodiment, the number of times the extraction process is performed can be changed without changing the configuration of the interaction system 1. In other words, the interaction system 1 can deal with, without changing the configuration thereof, the increase/decrease in the flow rate of the extractant and the raw material liquid to be processed and the increase/decrease in the required time of retaining the extractant and the raw material liquid in the process flow path sections 35 of the process flow paths 30.

In addition, in the first embodiment, when the extraction ability of the extractant has decreased by the extraction process repeatedly performed in the process flow paths 30 with the circulating extractant, the discharge valve 26 is switched from the closed state to the open state to discharge the extractant of which extraction ability has decreased to the outside of the interaction system 1. After discharging the extractant, the supply switching device 22 is switched from a separated fluid supply state to an unused fluid supply state (switching the first supply switching valve 42 to the open state and the second supply switching valve 44 to the closed state), whereby the unused extractant having a high extraction ability can be supplied from the extractant tank 2 to the process flow paths 30. The efficiency of the extraction process in the process flow paths 30 can thereby be recovered.

### (Second Embodiment)

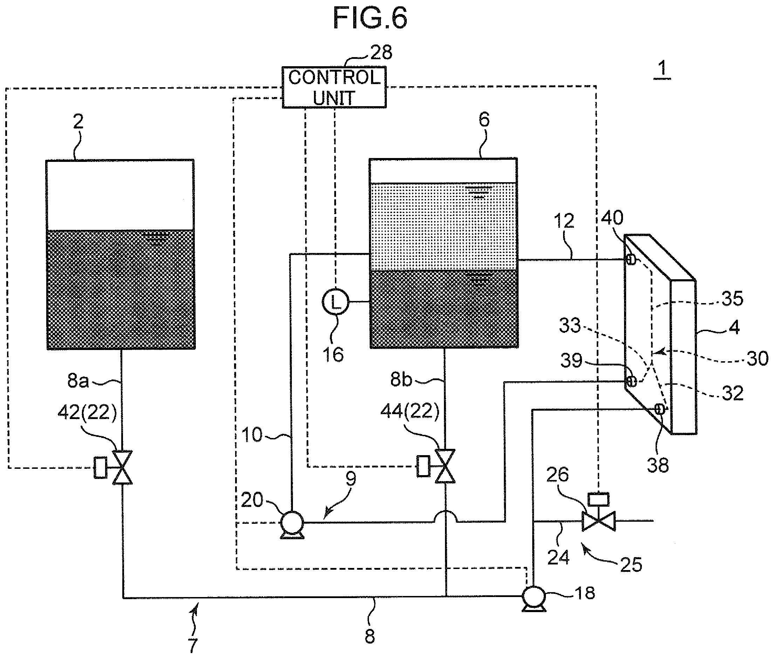

An interaction system 1 according to a second embodiment of the present invention will be described below with reference to FIGS. 6 to 10.

A basic configuration of the interaction system 1 according to the second embodiment is similar to that of the interaction system 1 according to the first embodiment. However, the interaction system 1 according to the second embodiment is adopted in a case where the specific gravity of extractant is larger than the specific gravity of raw material liquid, and is configured to supply the extractant separated in the separation container 6 as a heavy liquid to the process flow paths 30 and supply the raw material liquid separated in the separation container 6 as a light liquid to the process flow paths 30.

Specifically, in the interaction system 1 according to the second embodiment, as illustrated in FIG. 6, a second branch pipe 8b of an extractant supply pipe 8 is connected to a region, where the separated heavy liquid (extractant) is accumulated, of the separation container 6 at a level lower than a location on the separation container 6 to which a raw material liquid supply pipe 10 is connected. Thus, the heavy liquid (extractant) accumulated below the light liquid (raw material liquid) in the separation container 6 can be supplied to the process flow paths 30 through the extractant supply pipe 8.

The raw material liquid supply pipe 10 is connected to a region, where the separated light liquid (raw material liquid) is accumulated, of the separation container 6 at a level higher than a location on the separation container 6 to which the second branch pipe 8b of the extractant supply pipe 8 is connected. Thus, the light liquid (raw material liquid) accumulated above the heavy liquid (extractant) in the separation container 6 can be supplied to the process flow paths 30 through the raw material liquid supply pipe 10.

In the second embodiment, a level meter 16 detects the height level of the upper surface of the heavy liquid (extractant) accumulated in the separation container 6, that is, the height level of the boundary face between the heavy liquid and the light liquid accumulated in the separation container 6, and sends the information on the detected height level to the control unit 28.

Configurations other than that described above of the interaction system 1 according to the second embodiment are similar to that of the interaction system 1 according to the first embodiment.

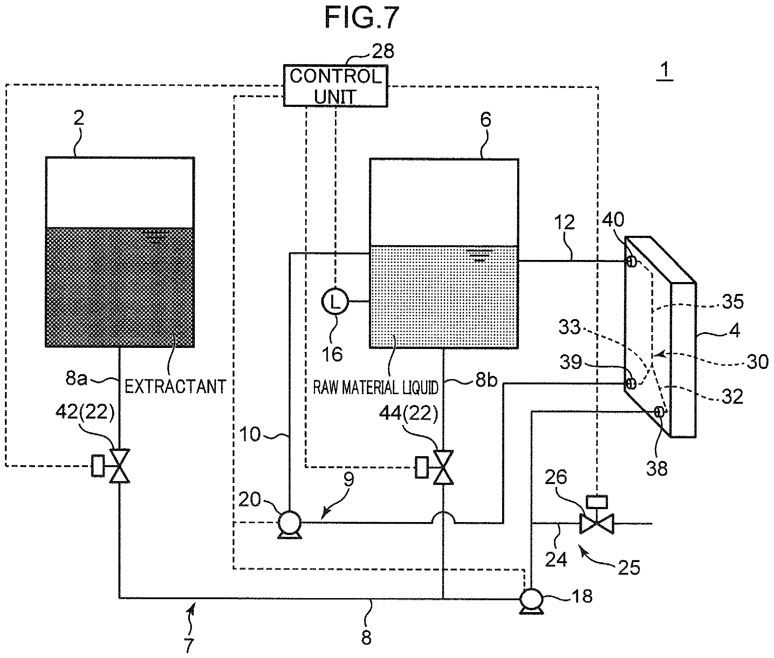

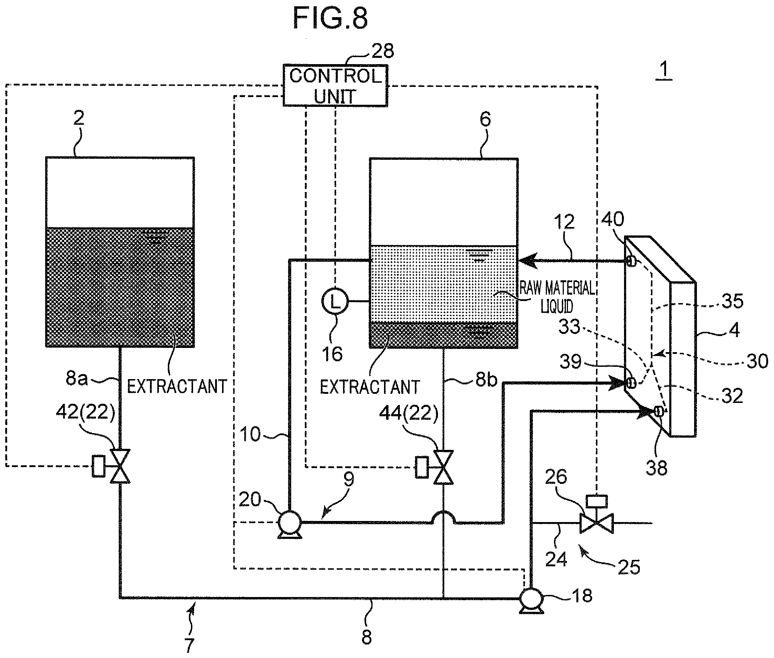

Next, an extraction method which is an example of an interaction method using the interaction system 1 according to the second embodiment will be described with reference to FIGS. 7 to 10. In FIGS. 8 to 10, flow paths that allow the raw material liquid and/or the extractant to flow through the flow paths are indicated by thick lines.

In the extraction method according to the second embodiment, as in the extraction method according to the first embodiment, the unused extractant is stored in the extractant tank 2 before the start of the extraction process, and the unprocessed raw material liquid is stored in the separation container 6 (see FIG. 7).

Then, as in the first embodiment, the control unit 28 switches the first supply switching valve 42 to the open state and operates the first pump 18, so that the unused extractant is supplied from the extractant tank 2 to the process flow paths 30 of the interaction unit 4. The control unit 28 operates the second pump 20 to supply the unprocessed raw material liquid from the separation container 6 to the process flow paths 30 of the interaction unit 4. As a result, the extraction process of the specific component from the raw material liquid in the process flow path sections 35 of the process flow paths 30 starts.

Then, the mixed fluid of the extractant and the raw material liquid that has been subjected to the extraction process and is discharged from the outlet 40 of the interaction unit 4 to be introduced into the separation container 6 is retained in the separation container 6, and is vertically separated into a light liquid (raw material liquid) and a heavy liquid (extractant) by the difference in specific gravity as illustrated in FIG. 8. The light liquid (raw material liquid) is sent from the separation container 6 to the process flow paths 30 of the interaction unit 4 through the raw material liquid supply pipe 10 by the second pump 20.

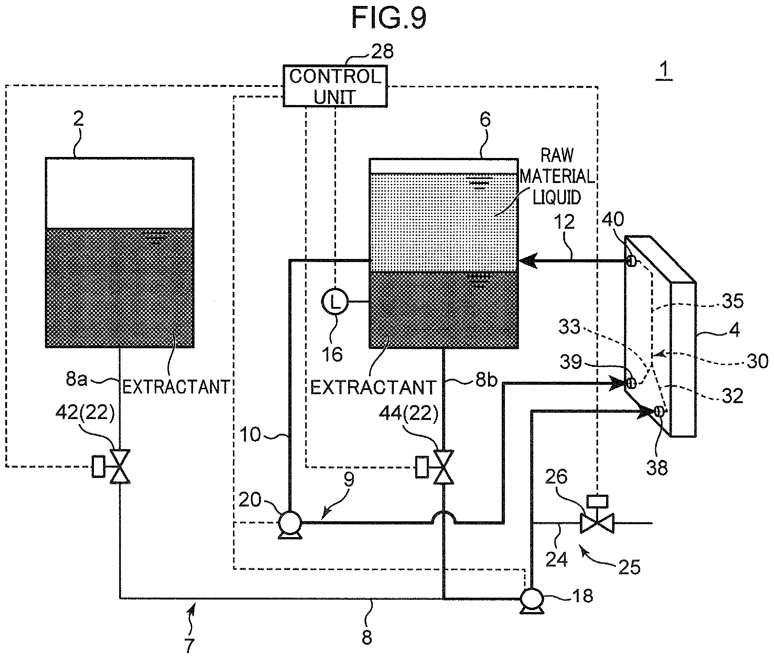

As time passes, the amount of the heavy liquid (extractant) accumulated in the separation container 6 increases. As illustrated in FIG. 9, when the amount of the extractant accumulated in the separation container 6 reaches a predetermined amount, the control unit 28 switches the second supply switching valve 44 to the open state and the first supply switching valve 42 to the closed state. Specifically, the control unit 28 switches the first supply switching valve 42 to the closed state and the second supply switching valve 44 to the open state at a timing when the control unit 28 determines that the height level of the upper surface of the heavy liquid accumulated in the separation container 6 (the height level of the boundary face between the light liquid and the heavy liquid) exceeds a preset specific height level based on the information acquired from the level meter 16.

The specific height level is arbitrarily set according to the amount of the extractant to be brought into contact with the raw material liquid in the process flow paths 30. Specifically, the volume ratio between the raw material liquid and the extractant to be brought into contact with the raw material liquid is determined in advance. A height corresponding to the volume ratio is obtained with respect to the height of the raw material liquid (light liquid) (height from the bottom surface in the separation container 6 to the upper surface of the raw material liquid) stored in the separation container 6 before the start of the extraction process. The specific height level is set to a level corresponding to the height calculated in this manner.

By switching the first supply switching valve 42 to the closed state and switching the second supply switching valve 44 to the open state, the supply of the extractant from the extractant tank 2 to the process flow paths 30 is stopped, and the extractant (heavy liquid) separated in the separation container 6 is supplied to the process flow paths 30 through the extractant supply pipe 8. Thereafter, as illustrated in FIG. 9, both the extractant and the raw material liquid circulate between the separation container 6 and the process flow paths 30 of the interaction unit 4, whereby extraction of the specific component from the raw material liquid in the process flow path sections 35 of the process flow paths 30 and separation of the mixed fluid into the extractant (heavy liquid) and the raw material liquid (light liquid) in the separation container 6 are repeatedly performed.

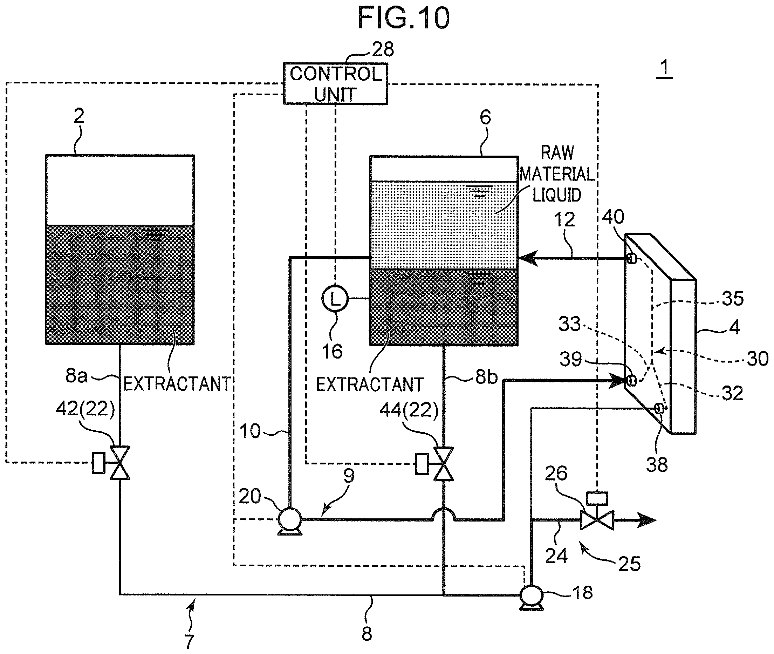

Then, as in the first embodiment, the control unit 28 switches the discharge valve 26 to the open state at a predetermined timing, and as a result, the extractant, of which concentration of the specific component has increased by being repeatedly used in the extraction process, is discharged to the outside of the interaction system 1 through the discharge pipe 24 as illustrated in FIG. 10. Along with this, the amount of the extractant (heavy liquid) accumulated in the separation container 6 decreases.

Then, the control unit 28 switches the discharge valve 26 to the closed state at a timing when the amount of the discharged extractant reaches a predetermined amount. Specifically, the control unit 28 switches the discharge valve 26 to the closed state at a timing when the control unit 28 determines that the upper surface of the heavy liquid (the boundary face between the light liquid and the heavy liquid) accumulated in the separation container 6 has descended to a preset discharge stop height level based on the information acquired from the level meter 16. This stops discharge of the extractant. Then, the process described above is repeatedly performed.

The lower limit of the discharge stop height level is the height level of the bottom surface in the separation container 6. The discharge stop height level is set higher than the height level of the bottom surface in the separation container 6 according to the percentage of replacing the extractant (heavy liquid) that has been used for the extraction process in the separation container 6 with the unused extractant. That is, the discharge stop height level is set to a low level when the percentage of replacing the extractant in the separation container 6 with the unused extractant is large, and to a high level when the percentage of replacing the extractant in the separation container 6 with the unused extractant is small.

Processes other than that described above in the extraction method according to the second embodiment are similar to that in the extraction method according to the first embodiment.

### (Effect According to Second Embodiment)

In the second embodiment, the extraction process using the extractant and the raw material liquid can be performed when the specific gravity of the extractant is larger than the specific gravity of the raw material liquid, and an effect similar to that of the first embodiment can be obtained.

### (Third Embodiment)

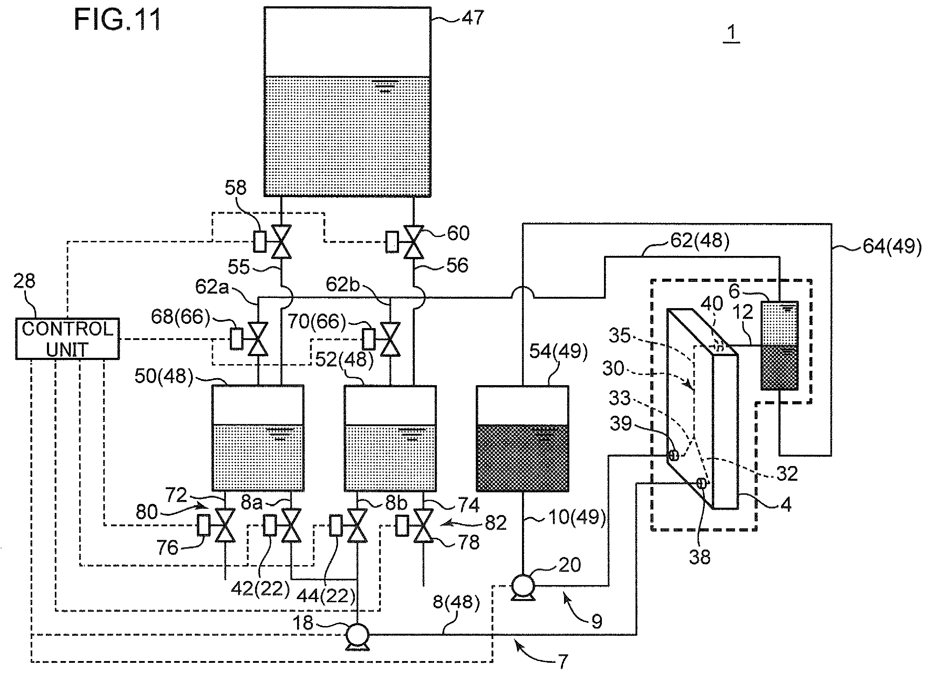

An interaction system 1 according to a third embodiment of the present invention will be described below with reference to FIGS. 11 to 16.

The interaction system 1 according to the third embodiment is configured to supply the unused extractant to the process flow paths 30 to perform the extraction process without being interrupted during a period in which the extractant, of which concentration of the specific component has increased by being repeatedly used in the extraction process, is discharged to the outside. The interaction system 1 according to the third embodiment includes, besides a separation container 6 for separating the mixed fluid flowing out from process flow paths 30 into the extractant and the raw material liquid, a raw material liquid tank 54 that stores the unprocessed raw material liquid. The interaction system 1 according to the third embodiment is adopted when the specific gravity of the extractant is smaller than the specific gravity of the raw material liquid.

Specifically, as illustrated in FIG. 11, the interaction system 1 according to the third embodiment includes an interaction unit 4, the separation container 6, a first supply device 7, a second supply device 9, a connection pipe 12, a first discharge unit 80, a second discharge unit 82, and a control unit 28.

The interaction unit 4 is similar to the interaction unit 4 in the first embodiment.

The separation container 6 retains the mixed fluid of the extractant and the raw material liquid that has flown out of process flow path sections 35 of process flow paths 30 of the interaction unit 4 to separate the mixed fluid into a light liquid (extractant) and a heavy liquid (raw material liquid) by the difference in specific gravity.

The first supply device 7 is a device that supplies the extractant to a first inlet 38 of the interaction unit 4. The first supply device 7 is an example of a first fluid supply device in the present invention. The first supply device 7 includes an extractant holding tank 47, an extractant path 48, a first feeding pipe 55, a second feeding pipe 56, a first feed switching valve 58, a second feed switching valve 60, a first pump 18, an inflow switching device 66, and a supply switching device 22.

The extractant holding tank 47 is a reserve tank that holds unused extractant to be fed to first and second storage tanks 50 and 52 described later.

The extractant path 48 connects a region, where the separated extractant (light liquid) is accumulated, of the separation container 6 and the first inlet 38 so as to guide the extractant separated in the separation container 6 to the first inlet 38 of the interaction unit 4. The extractant path 48 is an example of the first fluid path in the present invention. The extractant path 48 includes an extractant lead-out pipe 62, the first storage tank 50, the second storage tank 52, and an extractant supply pipe 8.

The extractant lead-out pipe 62 is connected to a region, where the separated extractant (light liquid) is accumulated, of the separation container 6 so as to lead out the extractant from the inside of the separation container 6. A portion of the extractant lead-out pipe 62 in the downstream in the flow direction of the extractant is branched into a first branch pipe 62a and a second branch pipe 62b.

The first storage tank 50 and the second storage tank 52 are connected to the extractant lead-out pipe 62 so as to receive, from the extractant lead-out pipe 62, the extractant led out from the separation container 6 to the extractant lead-out pipe 62. Specifically, the first storage tank 50 is connected to the first branch pipe 62a, and the second storage tank 52 is connected to the second branch pipe 62b. The first storage tank 50 is connected to the extractant holding tank 47 via the first feeding pipe 55, and the second storage tank 52 is connected to the extractant holding tank 47 via the second feeding pipe 56. Thus, the unused extractant can be fed from the extractant holding tank 47 to the first storage tank 50 through the first feeding pipe 55, and the unused extractant can be fed from the extractant holding tank 47 to the second storage tank 52 through the second feeding pipe 56. Each of the first storage tank 50 and the second storage tank 52 stores the extractant received from the extractant lead-out pipe 62 or the unused extractant fed from the extractant holding tank 47.

The first feed switching valve 58 is provided on the first feeding pipe 55. The first feed switching valve 58 is switchable between an open state of allowing the extractant to be fed from the extractant holding tank 47 to the first storage tank 50 through the first feeding pipe 55 and a closed state preventing feeding of the extractant.

The second feed switching valve 60 is provided on the second feeding pipe 56. The second feed switching valve 60 is switchable between an open state of allowing the extractant to be fed from the extractant holding tank 47 to the second storage tank 52 through the second feeding pipe 56 and a closed state preventing feeding of the extractant.

The extractant supply pipe 8 connects each of the first storage tank 50 and the second storage tank 52 to the first inlet 38 so as to guide the extractant stored in each of the first storage tank 50 and the second storage tank 52 to the first inlet 38 of the interaction unit 4. A portion of the extractant supply pipe 8 in the upstream in the flow direction of the extractant is branched into a first branch pipe 8a and a second branch pipe 8b, and the first branch pipe 8a is connected to the first storage tank 50 and the second branch pipe 8b is connected to the second storage tank 52.

The first pump 18 is provided on the extractant supply pipe 8 of the extractant path 48. The first pump 18 sends the extractant stored in the first storage tank 50 or the extractant stored in the second storage tank 52 to the first inlet 38 of the interaction unit 4 through the extractant supply pipe 8. Specifically, when the extractant separated in the separation container 6 is introduced into the first storage tank 50 or the second storage tank 52, the first pump 18 sends, to the first inlet 38 of the interaction unit 4, the extractant from the storage tank, among the first storage tank 50 and the second storage tank 52, to which the extractant is introduced. When the first pump 18 supplies, to the process flow path 30, the unused extractant from the first storage tank 50 or the second storage tank 52 that has been fed with the unused extractant, the first pump 18 sends the unused extractant to the first inlet 38.

The inflow switching device 66 is provided on the extractant lead-out pipe 62. The inflow switching device 66 switches an introduction destination (inflow destination) of the extractant (light liquid) that has been separated in the separation container 6 and led out to the extractant lead-out pipe 62 from one of the first storage tank 50 and the second storage tank 52 to the other. The inflow switching device 66 is configured to switch between a first inflow allowing state of allowing an inflow of the extractant from the extractant lead-out pipe 62 into the first storage tank 50 and preventing an inflow of the extractant from the extractant lead-out pipe 62 into the second storage tank 52, and a second inflow allowing state of allowing an inflow of the extractant from the extractant lead-out pipe 62 into the second storage tank 52 and preventing an inflow of the extractant from the extractant lead-out pipe 62 into the first storage tank 50.

Specifically, the inflow switching device 66 includes a first inflow switching valve 68 and a second inflow switching valve 70.

The first inflow switching valve 68 is provided on the first branch pipe 62a of the extractant lead-out pipe 62. The first inflow switching valve 68 is switchable between an open state of allowing the extractant to flow into the first storage tank 50 from the extractant lead-out pipe 62 and a closed state preventing the extractant from flowing into the first storage tank 50 from the extractant lead-out pipe 62.

The second inflow switching valve 70 is provided on the second branch pipe 62b of the extractant lead-out pipe 62. The second inflow switching valve 70 is switchable between an open state of allowing the extractant to flow into the second storage tank 52 from the extractant lead-out pipe 62 and a closed state preventing the extractant from flowing into the second storage tank 52 from the extractant lead-out pipe 62.

The first inflow allowing state of the inflow switching device 66 is a state in which the first inflow switching valve 68 is in the open state and the second inflow switching valve 70 is in the closed state. The second inflow allowing state of the inflow switching device 66 is a state in which the first inflow switching valve 68 is in the closed state and the second inflow switching valve 70 is in the open state.

The supply switching device 22 is provided on the extractant supply pipe 8. The supply switching device 22 switches the supply source of the extractant sent to the first inlet 38 by the first pump 18 from one of the first storage tank 50 and the second storage tank 52 to the other. The supply switching device 22 is configured to switch between a first supply state and a second supply state, the first supply state being a state of allowing the extractant to be supplied from the first storage tank 50 to the first inlet 38 through the extractant supply pipe 8 and preventing supply of the extractant from the second storage tank 52 to the first inlet 38, the second supply state being a state of allowing the extractant to be supplied from the second storage tank 52 to the first inlet 38 through the extractant supply pipe 8 and preventing supply of the extractant from the first storage tank 50 to the first inlet 38.

Specifically, the supply switching device 22 includes a first supply switching valve 42 and a second supply switching valve 44.

The first supply switching valve 42 is provided on the first branch pipe 8a of the extractant supply pipe 8. The first supply switching valve 42 is switchable between an open state of allowing the extractant to flow from the first storage tank 50 to the first inlet 38 through the extractant supply pipe 8 and a closed state preventing the extractant from flowing from the first storage tank 50 to the first inlet 38.

The second supply switching valve 44 is provided on the second branch pipe 8b of the extractant supply pipe 8. The second supply switching valve 44 is switchable between an open state of allowing the extractant to flow from the second storage tank 52 to the first inlet 38 through the extractant supply pipe 8 and a closed state preventing the extractant from flowing from the second storage tank 52 to the first inlet 38.

The second supply device 9 is a device that supplies the raw material liquid to the second inlet 39 of the interaction unit 4. The second supply device 9 includes a raw material liquid path 49 and a second pump 20.

The raw material liquid path 49 connects a region, where the separated raw material liquid (heavy liquid) is accumulated, of the separation container 6 and the second inlet 39 so as to guide the raw material liquid separated in the separation container 6 to the second inlet 39 of the interaction unit 4. The raw material liquid path 49 is an example of the second fluid path in the present invention. The raw material liquid path 49 includes a raw material liquid lead-out pipe 64, a raw material liquid tank 54, and a raw material liquid supply pipe 10.

The raw material liquid lead-out pipe 64 is connected to a region, where the separated raw material liquid (light liquid) is accumulated, of the separation container 6 so as to lead out the raw material liquid from the inside of the separation container 6.

The raw material liquid tank 54 is connected to the raw material liquid lead-out pipe 64 so as to receive, from the raw material liquid lead-out pipe 64, the raw material liquid led out from the separation container 6 to the raw material liquid lead-out pipe 64. The raw material liquid tank 54 can be fed with the unprocessed raw material liquid from the outside. The raw material liquid tank 54 stores the raw material liquid received from the raw material liquid lead-out pipe 64 or the unprocessed raw material liquid that has been fed. The raw material liquid tank 54 is an example of a second fluid tank in the present invention.

The raw material liquid supply pipe 10 connects the raw material liquid tank 54 and the second inlet 39 so as to guide the raw material liquid stored in the raw material liquid tank 54 to the second inlet 39 of the interaction unit 4.

The second pump 20 is provided on the raw material liquid supply pipe 10 of the raw material liquid path 49. The second pump 20 sends the raw material liquid stored in the raw material liquid tank 54 to the second inlet 39 of the interaction unit 4 through the raw material liquid supply pipe 10. Specifically, when the raw material liquid separated in the separation container 6 is introduced into the raw material liquid tank 54, the introduced raw material liquid is sent to the second inlet 39 of the interaction unit 4 by the second pump 20. When the raw material liquid tank 54 has been fed with the unprocessed raw material liquid and the unprocessed raw material liquid is supplied to the process flow path 30, the second pump 20 sends the unprocessed raw material liquid to the second inlet 39.

The first discharge unit 80 is connected to the first storage tank 50. The first discharge unit 80 is adapted for discharging, from the first storage tank 50, the extractant of which extraction ability has decreased due to an increase in the concentration of the contained specific component as a result of repeated extraction process in the process flow path 30. The first discharge unit 80 is configured to switch between a first discharge state of discharging the extractant from the first storage tank 50 to the outside of the interaction system 1 and a first discharge prevention state of preventing the extractant from being discharged. The first discharge unit 80 includes a first discharge pipe 72 and a first discharge valve 76.

The first discharge pipe 72 is connected to the first storage tank 50 so that the extractant stored in the first storage tank 50 can be led out.

The first discharge valve 76 is provided on the first discharge pipe 72. The first discharge valve 76 is configured to be switchable between an open state of allowing the extractant to be discharged from the first storage tank 50 through the first discharge pipe 72 and a closed state preventing discharge of the extractant.

The first discharge state is a state in which the first discharge valve 76 is in the open state, and the first discharge prevention state is a state in which the first discharge valve 76 is in the closed state.

The second discharge unit 82 is connected to the second storage tank 52. The second discharge unit 82 is adapted for discharging, from the second storage tank 52, the extractant of which extraction ability has decreased due to an increase in the concentration of the contained specific component as a result of repeated extraction process in the process flow path 30. The second discharge unit 82 is configured to switch between a second discharge state of discharging the extractant from the second storage tank 52 to the outside of the interaction system 1 and a second discharge prevention state of preventing the extractant from being discharged. The second discharge unit 82 includes a second discharge pipe 74 and a second discharge valve 78.

The second discharge pipe 74 is connected to the second storage tank 52 so that the extractant stored in the second storage tank 52 can be led out.

The second discharge valve 78 is provided on the second discharge pipe 74. The second discharge valve 78 is configured to be switchable between an open state of allowing the extractant to be discharged from the second storage tank 52 through the second discharge pipe 74 and a closed state preventing discharge of the extractant.

The second discharge state is a state in which the second discharge valve 78 is in the open state, and the second discharge prevention state is a state in which the second discharge valve 78 is in the closed state.

The control unit 28 performs switching control of opening and closing each of the first feed switching valve 58, the second feed switching valve 60, the first supply switching valve 42, the second supply switching valve 44, the first inflow switching valve 68, the second inflow switching valve 70, the first discharge valve 76, and the second discharge valve 78, and controls the operation of each of the first pump 18 and the second pump 20. Specific contents of the control performed by the control unit 28 will be described in the following description on an interaction method (extraction method).

Configurations other than that described above of the interaction system 1 according to the third embodiment are similar to that of the interaction system 1 according to the first embodiment.

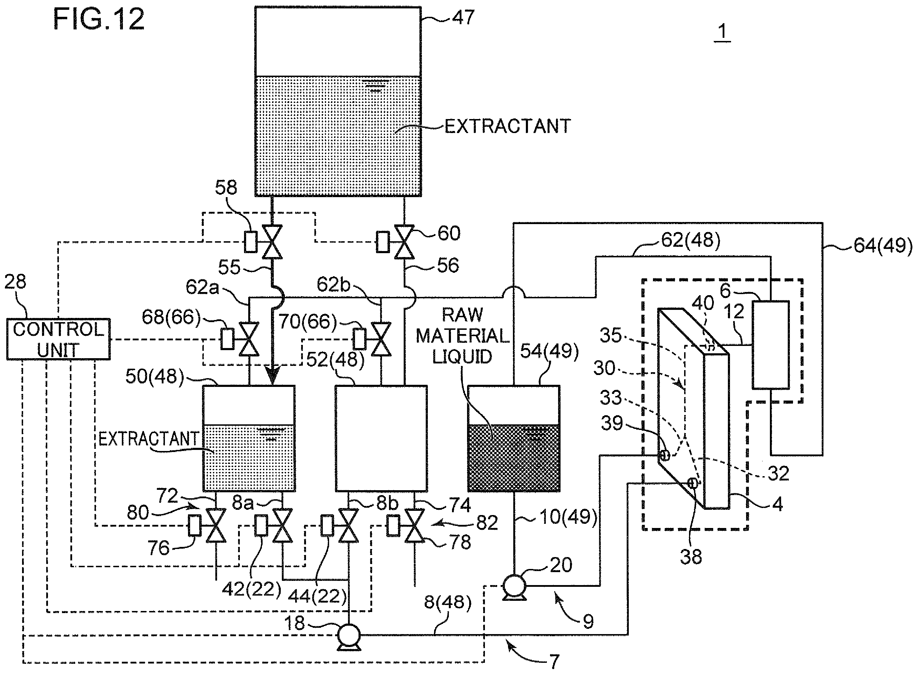

Next, an extraction method which is an example of an interaction method using the interaction system 1 according to the third embodiment will be described with reference to FIGS. 12 to 16. In FIGS. 12 to 16, flow paths that allow the raw material liquid and/or the extractant to flow through the flow paths are indicated by thick lines.

In the extraction method according to the third embodiment, before the start of the extraction process, as illustrated in FIG. 12, the unused extractant is fed from the extractant holding tank 47 to the first storage tank 50, and the unprocessed raw material liquid is fed to the raw material liquid tank 54.

The feeding of the unused extractant to the first storage tank 50 is performed by the control unit 28 switching the first feed switching valve 58 to the open state so that the unused extractant flows from the extractant holding tank 47 into the first storage tank 50 through the first feeding pipe 55. Meanwhile, the second feed switching valve 60 is kept in the closed state, and the second storage tank 52 is not fed with the unused extractant from the extractant holding tank 47. Meanwhile, the first supply switching valve 42, the second supply switching valve 44, the first inflow switching valve 68, the second inflow switching valve 70, the first discharge valve 76, and the second discharge valve 78 are all in the closed state.

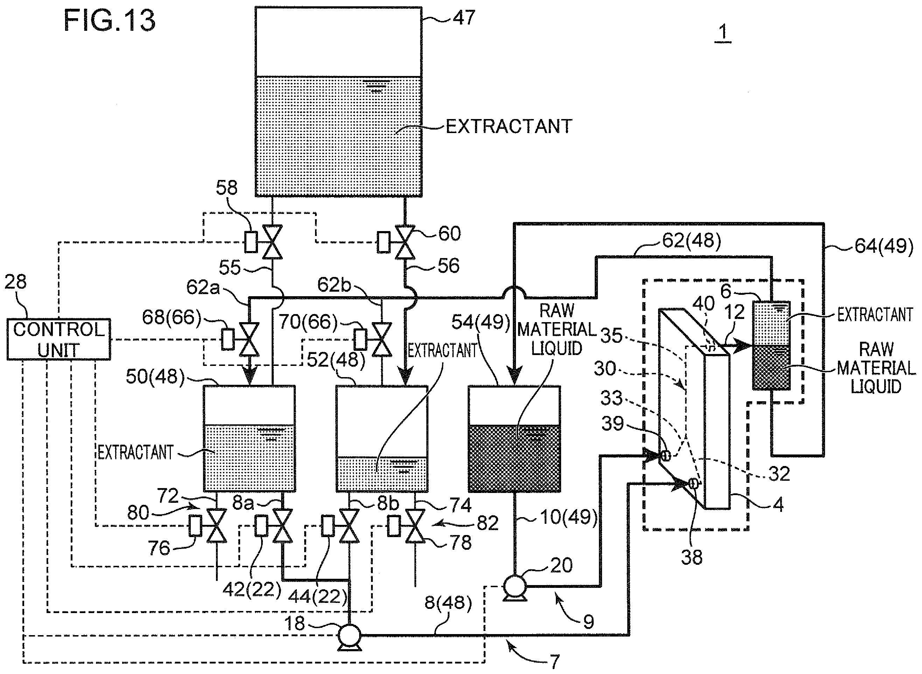

Then, the extraction process starts in the interaction system 1. Specifically, as illustrated in FIG. 13, the supply of the extractant from the first storage tank 50 to the process flow paths 30 of the interaction unit 4 starts, and the supply of the raw material liquid from the raw material liquid tank 54 to the process flow paths 30 of the interaction unit 4 starts. Meanwhile, the control unit 28 sets the first supply switching valve 42 to the open state and operates the first pump 18, and the extractant is sent from the first storage tank 50 to the first inlet 38 of the interaction unit 4 through the extractant supply pipe 8 by the first pump 18. Simultaneously, the control unit 28 also sets the first inflow switching valve 68 to the open state. The control unit 28 operates the second pump 20, and the raw material liquid is sent from the raw material liquid tank 54 to the second inlet 39 of the interaction unit 4 through the raw material liquid supply pipe 10 by the second pump 20.

In each of the process flow paths 30, as in the case of the extraction method according to the first embodiment, the extraction process is performed in which the specific component is extracted from the raw material liquid and transported into the extractant while the extractant and the raw material liquid that have been sent to the interaction unit 4 flow. The extractant and the raw material liquid that have been subjected to the extraction process are discharged from the outlet 40 of the interaction unit 4 and introduced into the separation container 6.

The mixed fluid of the extractant and the raw material liquid introduced into the separation container 6 is vertically separated into the extractant as a light liquid and the raw material liquid as a heavy liquid as in the first embodiment. The extractant (light liquid) separated in the separation container 6 is led out from the inside of the separation container 6 to the extractant lead-out pipe 62. Meanwhile, since the first inflow switching valve 68 is in the open state, the extractant (light liquid) is introduced into the first storage tank 50 from the extractant lead-out pipe 62. Meanwhile, since the second inflow switching valve 70 is in the closed state, the extractant (light liquid) is not introduced into the second storage tank 52. Thus, the extractant circulates among the first storage tank 50, the process flow paths 30 of the interaction unit 4, and the separation container 6.

The raw material liquid (heavy liquid) separated in the separation container 6 is led out from the inside of the separation container 6 to the raw material liquid lead-out pipe 64, and is introduced into the raw material liquid tank 54 through the raw material liquid lead-out pipe 64. The raw material liquid circulates among the raw material liquid tank 54, the process flow paths 30 of the interaction unit 4, and the separation container 6.

During a period in which the extraction process is performed in the process flow paths 30 while the extractant and the raw material liquid circulate as described above, as illustrated in FIG. 13, the unused extractant is fed from the extractant holding tank 47 to the second storage tank 52. Specifically, the control unit 28 sets the second feed switching valve 60 to the open state, whereby the unused extractant is fed from the extractant holding tank 47 to the second storage tank 52 through the second feeding pipe 56. The control unit 28 switches the second feed switching valve 60 to the closed state at a timing when the second storage tank 52 is fed with a predetermined amount of extractant. Thereby, feeding of the unused extractant to the second storage tank 52 is stopped.

Then, the control unit 28 switches the first supply switching valve 42 and the first inflow switching valve 68 to the closed state and the second supply switching valve 44 and the second inflow switching valve 70 to the open state at a timing when a predetermined time elapses from a timing at which the extractant has started circulating among the first storage tank 50, the process flow paths 30, and the separation container 6 (the timing at which the first supply switching valve 42 is switched to the open state). This stops the supply of the extractant from the first storage tank 50 to the process flow paths 30 and returning of the extractant from the separation container 6 to the first storage tank 50. Instead, the supply of the extractant from the second storage tank 52 to the process flow paths 30 starts, and the extraction process between the extractant and the raw material liquid supplied from the raw material liquid tank 54 to the process flow paths 30 is performed in the process flow paths 30. After the extraction process, the extractant separated in the separation container 6 returns to the second storage tank 52. That is, the state of the extractant circulating among the first storage tank 50, the process flow paths 30, and the separation container 6 is switched to the state of the extractant circulating among the second storage tank 52, the process flow paths 30, and the separation container 6.

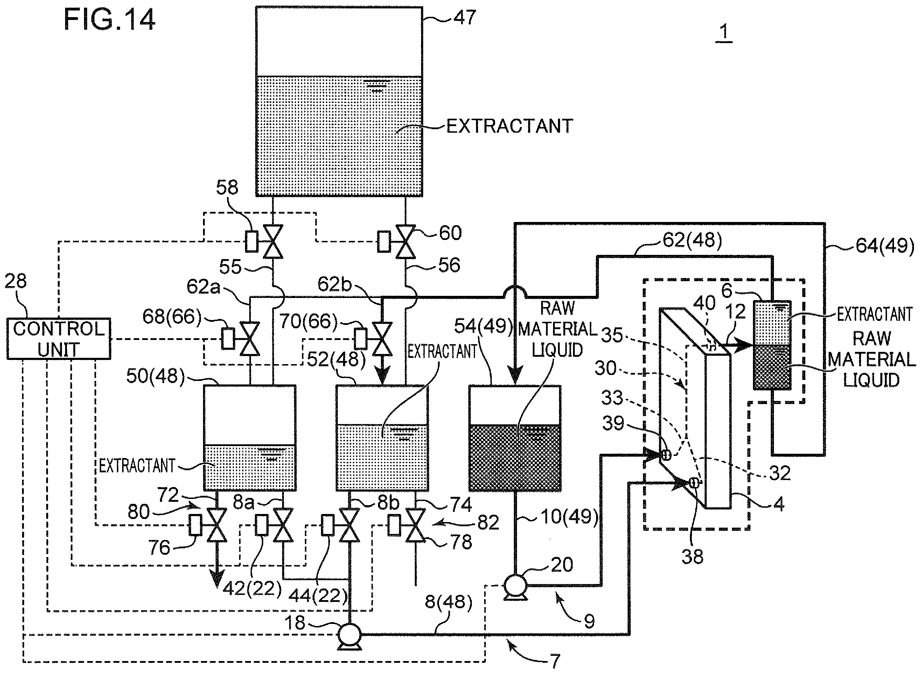

When the control unit 28 switches the first supply switching valve 42 and the first inflow switching valve 68 to the closed state and the second supply switching valve 44 and the second inflow switching valve 70 to the open state as described above, the control unit 28 simultaneously switches the first discharge valve 76 to the open state. As a result, the extractant, of which concentration of the specific component has increased by being repeatedly used for the extraction process by circulating among the first storage tank 50, the process flow paths 30, and the separation container 6, is discharged from the first storage tank 50 to the outside of the interaction system 1 through the first discharge pipe 72 as illustrated in FIG. 14. Then, the control unit 28 switches the first discharge valve 76 to the closed state at a timing when the whole extractant in the first storage tank 50 is discharged.

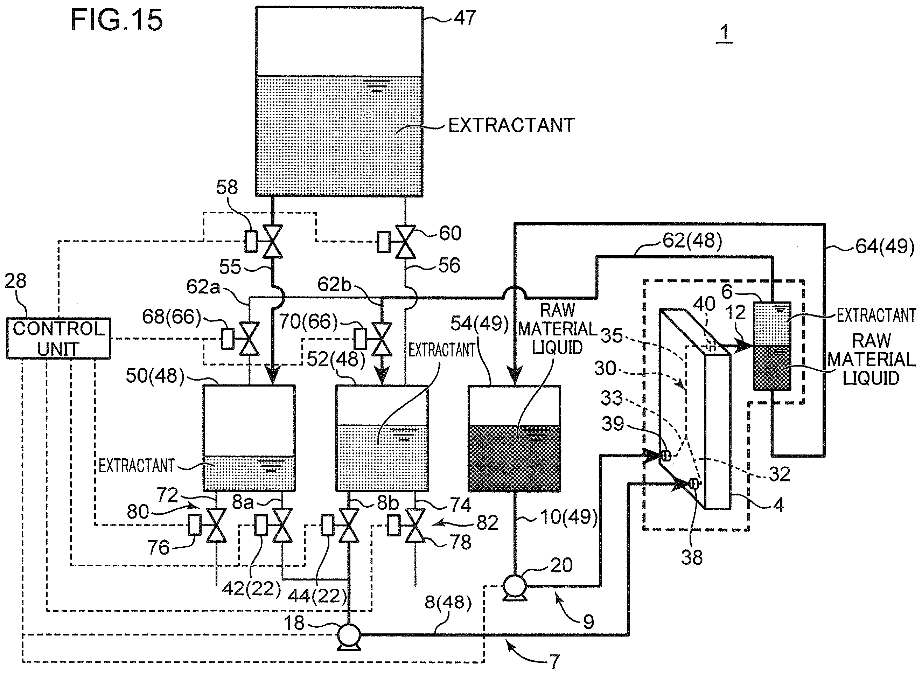

Then, the control unit 28 switches the first feed switching valve 58 to the open state. As a result, as illustrated in FIG. 15, the unused extractant is fed from the extractant holding tank 47 to the first storage tank 50 through the first feeding pipe 55. That is, by discharging the extractant from the first storage tank 50 and feeding the first storage tank 50 with the unused extractant, the extractant having a low extraction ability in the first storage tank 50 is replaced with the unused extractant having a high extraction ability. This replacement of extractant is performed in parallel in a period in which the extractant is circulated among the second storage tank 52, the process flow paths 30, and the separation container 6. Then, the control unit 28 switches the first feed switching valve 58 to the closed state at a timing when the first storage tank 50 is fed with a predetermined amount of extractant. As a result, feeding of the unused extractant to the first storage tank 50 is stopped.

Then, the control unit 28 switches the second supply switching valve 44 and the second inflow switching valve 70 to the closed state and the first supply switching valve 42 and the first inflow switching valve 68 to the open state at a timing when a predetermined time elapses from the timing at which the extractant has started circulating among the second storage tank 52, the process flow paths 30, and the separation container 6 (the timing at which the second supply switching valve 44 is switched to the open state). This stops the supply of the extractant from the second storage tank 52 to the process flow paths 30 and returning of the extractant from the separation container 6 to the second storage tank 52. Instead, the supply of the extractant from the first storage tank 50 to the process flow paths 30 starts, and the extraction process between the extractant and the raw material liquid supplied from the raw material liquid tank 54 to the process flow paths 30 is performed in the process flow paths 30. After the extraction process, the extractant separated in the separation container 6 is returned to the first storage tank 50. That is, the state of the extractant circulating among the second storage tank 52, the process flow paths 30, and the separation container 6 is switched to the state of the extractant circulating among the first storage tank 50, the process flow paths 30, and the separation container 6.

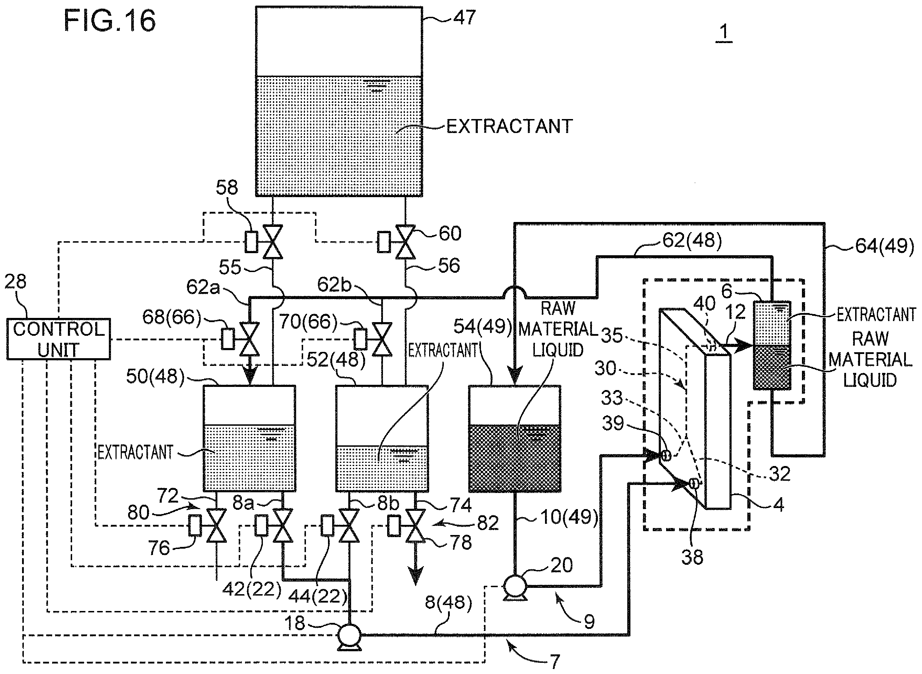

When the control unit 28 switches the second supply switching valve 44 and the second inflow switching valve 70 to the closed state and the first supply switching valve 42 and the first inflow switching valve 68 to the open state as described above, the control unit 28 simultaneously switches the second discharge valve 78 to the open state. As a result, the extractant, of which concentration of the specific component has increased by being repeatedly used for the extraction process by circulating among the second storage tank 52, the process flow paths 30, and the separation container 6, is discharged from the second storage tank 52 to the outside of the interaction system 1 through the second discharge pipe 74 as illustrated in FIG. 16. Then, the control unit 28 switches the second discharge valve 78 to the closed state at a timing when the whole extractant in the second storage tank 52 is discharged. Thereafter, the process described above is repeatedly performed.

Processes other than that described above in the extraction method according to the third embodiment are similar to that in the extraction method according to the first embodiment.

### (Effect According to Third Embodiment)

In the third embodiment, when the extraction ability has decreased by the extraction repeatedly performed in the process flow paths 30 while the extractant circulates among the first storage tank 50, the process flow paths 30, and the separation container 6, the second supply switching valve 44 and the second inflow switching valve 70 are switched to the open state and the first supply switching valve 42 and the first inflow switching valve 68 are switched to the closed state, whereby the unused extractant stored in the second storage tank 52 can be supplied to the process flow path 30 to recover the efficiency of the extraction process.

In addition, when the extraction ability has decreased by the extraction repeatedly performed in the process flow paths 30 while the extractant circulates among the second storage tank 52, the process flow paths 30, and the separation container 6, the second supply switching valve 44 and the second inflow switching valve 70 are switched to the open state and the first supply switching valve 42 and the first inflow switching valve 68 are switched to the closed state, whereby the unused extractant stored in the second storage tank 52 can be supplied to the process flow path 30 to recover the efficiency of the extraction process.

Moreover, in the third embodiment, when the extraction ability has decreased while the extractant circulates among the first storage tank 50, the process flow paths 30, and the separation container 6, the extractant of which extraction ability has decreased is discharged from the first storage tank 50 by switching the first discharge valve 76 to the open state, and the unused extractant is fed from the extractant holding tank 47 to the first storage tank 50 by switching the first feed switching valve 58 to the open state, whereby the extractant can be replaced. During the replacement of the extractant, the extractant is supplied from the second storage tank 52 to the process flow paths 30, so that the extraction process can be performed without being interrupted.

In addition, when the extraction ability has decreased while the extractant circulates among the second storage tank 52, the process flow paths 30, and the separation container 6, the extractant of which extraction ability has decreased is discharged from the second storage tank 52 by switching the second discharge valve 78 to the open state, and the unused extractant is fed from the extractant holding tank 47 to the second storage tank 52 by switching the second feed switching valve 60 to the open state, whereby the extractant can be replaced. During the replacement of the extractant, the extractant is supplied from the first storage tank 50 to the process flow paths 30, so that the extraction process can be performed without being interrupted.

Effects other than that described above according to the third embodiment are similar to that according to the first embodiment.

### (Fourth Embodiment)

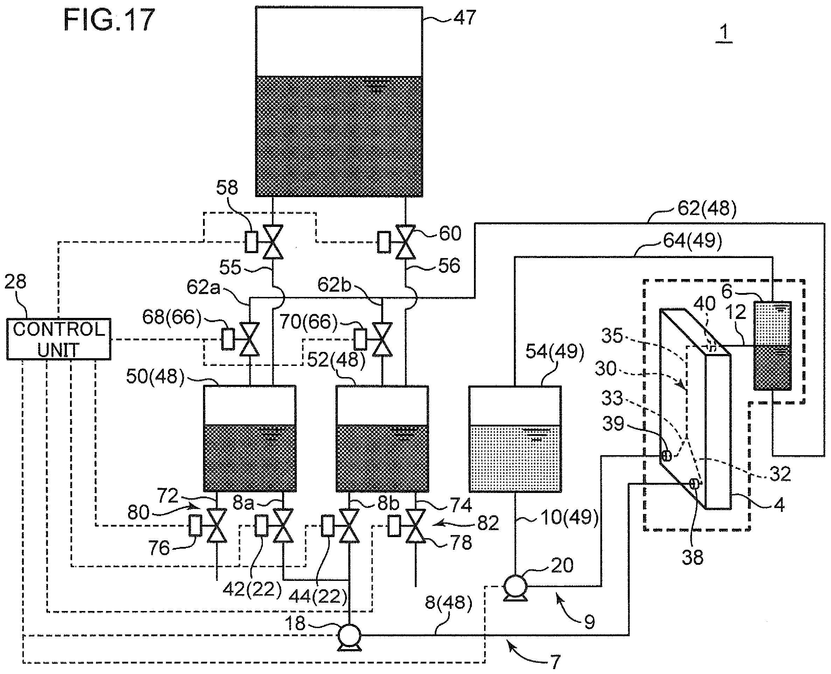

An interaction system 1 according to a fourth embodiment of the present invention will be described below with reference to FIG. 17.

A basic configuration of the interaction system 1 according to the fourth embodiment is similar to that of the interaction system 1 according to the third embodiment. However, the interaction system 1 according to the fourth embodiment is adopted in a case where the specific gravity of extractant is larger than the specific gravity of raw material liquid, and is configured to supply the extractant separated in the separation container 6 as a heavy liquid to the process flow paths 30 and supply the raw material liquid separated in the separation container 6 as a light liquid to the process flow paths 30.

Specifically, in the interaction system 1 according to the fourth embodiment, as illustrated in FIG. 17, an extractant lead-out pipe 62 is connected to a region, where the separated heavy liquid (extractant) is accumulated, of the separation container 6 at a level lower than a location on the separation container 6 to which a raw material liquid lead-out pipe 64 is connected. Thus, the heavy liquid (extractant) accumulated below the light liquid (raw material liquid) in the separation container 6 can be returned to the first storage tank 50 and the second storage tank 52 through the extractant lead-out pipe 62, and the heavy liquid (extractant) can be supplied from the first storage tank 50 and the second storage tank 52 to the process flow paths 30 through the extractant supply pipe 8.

In the interaction system 1 according to the fourth embodiment, the raw material liquid lead-out pipe 64 is connected to a region, where the light liquid (raw material liquid) is accumulated, of the separation container 6 at a level higher than a location on the separation container 6 to which the extractant lead-out pipe 62 is connected. Thus, the light liquid (raw material liquid) accumulated above the heavy liquid (extractant) in the separation container 6 can be returned to the raw material liquid tank 54 through the raw material liquid lead-out pipe 64, and the light liquid (raw material liquid) can be supplied from the raw material liquid tank 54 to the process flow paths 30 of the interaction unit 4 through the raw material liquid supply pipe 10.

Configurations other than that described above of the interaction system 1 according to the fourth embodiment are similar to that of the interaction system 1 according to the third embodiment.

An extraction method which is an example of an interaction method using the interaction system 1 according to the fourth embodiment is similar to the extraction method according to the third embodiment except that the mixed fluid of the extractant and the raw material liquid that have been subjected to the extraction process and discharged from the process flow paths 30 of the interaction unit 4 to be introduced into the separation container 6 is retained in the separation container 6 and is vertically separated into the raw material liquid as a light liquid and the extractant as a heavy liquid by the difference in specific gravity.

### (Effect According to Fourth Embodiment)

In the fourth embodiment, when the specific gravity of extractant is larger than the specific gravity of raw material liquid, the extraction process using the extractant and the raw material liquid can be performed, and an effect similar to that of the third embodiment can be obtained.

### (Modifications)

The interaction system and the interaction method according to the present invention are not necessarily limited to that in the above embodiments. For the interaction system and the interaction method according to the present invention, for example, the following technique can be adopted.

### (First Fluid Supply Device)

The first fluid supply device in the present invention may be of any device that supplies at least the unused extractant, among the unused extractant and the extractant separated in the separation container, to the inlet of the process flow paths. That is, as in the first and second embodiments, the first supply device 7 as the first fluid supply device may selectively supply either the unused extractant stored in the extractant tank 2 or the extractant separated in the separation container 6 to the first inlet 38 of the process flow paths 30 of the interaction unit 4, or unlike the first and second embodiments, the first supply device 7 may exclusively supply the unused extractant stored in the extractant tank 2 to the first inlet 38 of the process flow paths 30 of the interaction unit 4. Now described below are an interaction system 1 according to a first modification in which the interaction system 1 according to the first embodiment is modified such that the first supply device 7 supplies only the unused extractant stored in the extractant tank 2 to the first inlet 38, and an interaction system 1 according to a second modification in which the interaction system 1 according to the second embodiment is modified such that the first supply device 7 supplies only the unused extractant stored in the extractant tank 2 to the first inlet 38.

### (First Modification)

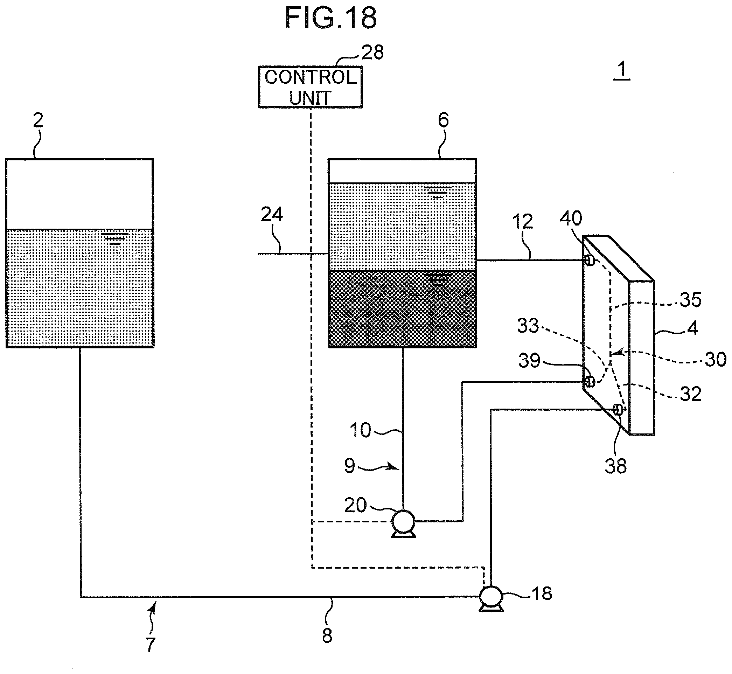

FIG. 18 illustrates an overall configuration of the interaction system 1 according to the first modification. In the interaction system 1 according to the first modification, an extractant supply pipe 8 of the first supply device 7 connects only the extractant tank 2 to the first inlet 38 of the interaction unit 4 and does not connect the separation container 6 to the first inlet 38. That is, in the first embodiment, the extractant supply pipe 8 has the second branch pipe 8b connected to the region, where the separated extractant (light liquid) is accumulated, of the separation container 6, but in the first modification, the extractant supply pipe 8 does not have the second branch pipe 8b and is not connected to the separation container 6. With the above configuration of the extractant supply pipe 8, only the unused extractant stored in the extractant tank 2 is exclusively supplied to the first inlet 38 of the interaction unit 4 through the extractant supply pipe 8 of the first supply device 7.

In addition, the interaction system 1 according to the first modification is configured to discharge the extractant separated in the separation container 6 as a light liquid to the outside of the interaction system 1. Specifically, in the interaction system 1 according to the first modification, a discharge pipe 24, instead of the extractant supply pipe 8, is connected to a region, where the separated extractant (light liquid) is accumulated, of the separation container 6. The discharge pipe 24 guides the extractant (light liquid) separated in the separation container 6 to the outside of the interaction system 1. The discharge pipe 24 in the first modification is an example of a first fluid discharge path in the present invention.

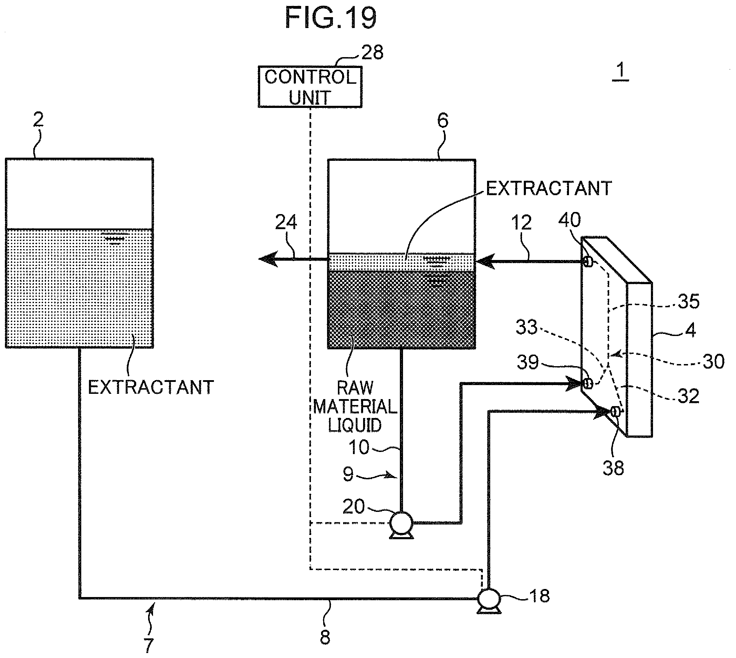

Next, an extraction method as an example of an interaction method using the interaction system 1 according to the first modification will be described with reference to FIG. 19. In FIG. 19, flow paths that allow the raw material liquid and/or the extractant to flow through the flow paths are indicated by thick lines.

In the extraction method according to the first modification, unlike the extraction method according to the first embodiment, the extractant separated in the separation container 6 as a light liquid is discharged from the separation container 6 to the outside of the interaction system 1 through the discharge pipe 24 as illustrated in FIG. 19. In the first modification, while the raw material liquid circulating between the separation container 6 and the process flow paths 30 is repeatedly supplied to the process flow paths 30 and subjected to the extraction process, the extractant supplied to the process flow paths 30 is always the unused extractant, and the unused extractant supplied to the process flow paths 30 is used for the extraction process only once, and then the extractant is separated from the raw material liquid in the separation container 6 and discharged to the outside of the interaction system 1.

In the first modification, since the raw material liquid is circulated between the separation container 6 and the process flow paths 30 of the interaction unit 4, an effect similar to that of the first embodiment can be obtained, that is, the rate of extracting the specific component from the raw material liquid can be raised by performing extraction a plurality of times which is equivalent to multi-stage extraction while suppressing the interaction system 1 from becoming complicated, and reducing the lifting height and the required power of the second pump 20.

Moreover, in the first modification, since the unused extractant having a higher extraction ability than the extractant separated in the separation container 6 is always supplied to the process flow paths 30 of the interaction unit 4, the efficiency of the extraction process in the process flow paths 30 can be kept high.

### (Second Modification)

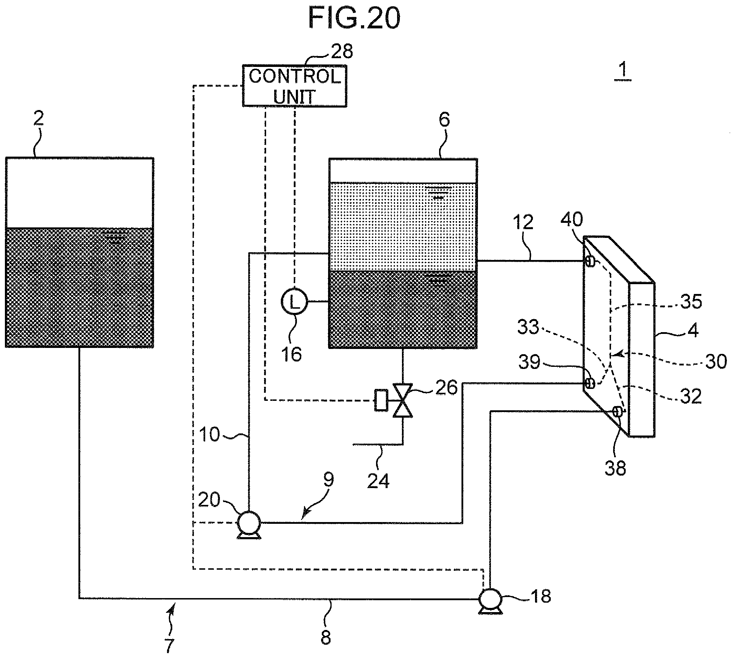

FIG. 20 illustrates an overall configuration of the interaction system 1 according to the second modification. The second modification is a modification of the second embodiment as described above. In the interaction system 1 according to the second modification, an extractant supply pipe 8 of the first supply device 7 connects only the extractant tank 2 to the first inlet 38 of the interaction unit 4, and does not connect the separation container 6 to the first inlet 38. That is, in the second embodiment, the extractant supply pipe 8 has the second branch pipe 8b connected to the region, where the separated extractant (heavy liquid) is accumulated, of the separation container 6, but in the second modification, the extractant supply pipe 8 does not have the second branch pipe 8b and is not connected to the separation container 6. With the above configuration of the extractant supply pipe 8, only the unused extractant stored in the extractant tank 2 is exclusively supplied to the first inlet 38 of the interaction unit 4 through the extractant supply pipe 8 of the first supply device 7.

In addition, the interaction system 1 according to the second modification is configured to discharge the extractant separated in the separation container 6 as a heavy liquid to the outside of the interaction system 1. Specifically, in the interaction system 1 according to the second modification, a discharge pipe 24, instead of the extractant supply pipe 8, is connected to a region, where the separated extractant (heavy liquid) is accumulated, of the separation container 6. The discharge pipe 24 guides the extractant (heavy liquid) separated in the separation container 6 to the outside of the interaction system 1. The discharge pipe 24 in the second modification is an example of the first fluid discharge path in the present invention.

The interaction system 1 according to the second modification includes a discharge valve 26 provided on the discharge pipe 24. The discharge valve 26 is configured to be switchable between an open state of allowing the extractant (heavy liquid) separated in the separation container 6 to be discharged to the outside of the interaction system 1 through the discharge pipe 24 and a closed state preventing discharge of the extractant. This switching control of opening and closing the discharge valve 26 is performed by the control unit 28.

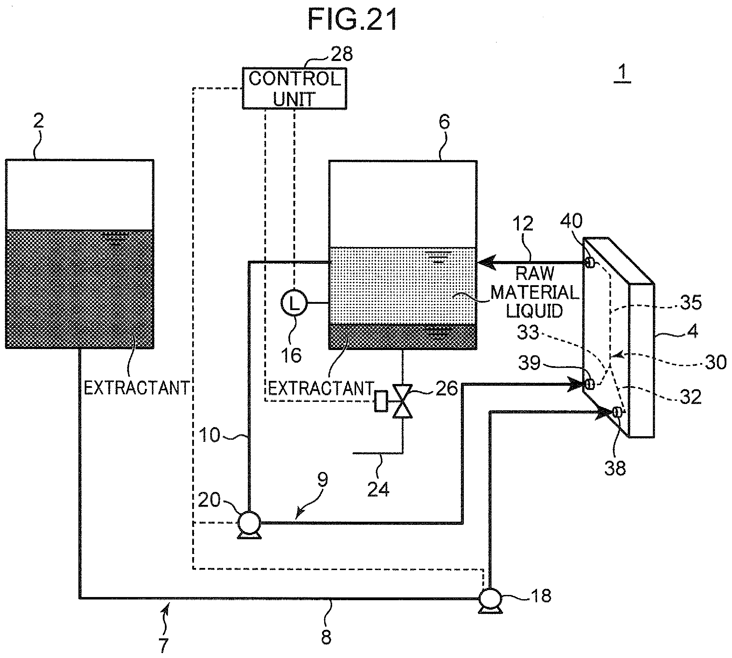

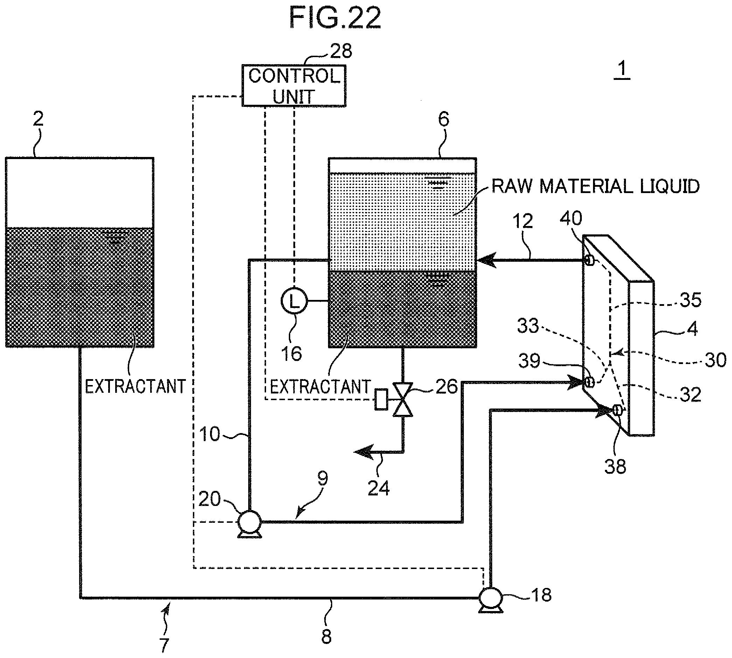

Next, an extraction method which is an example of an interaction method using the interaction system 1 according to the second modification will be described with reference to FIGS. 21 and 22. In FIGS. 21 and 22, flow paths that allow the raw material liquid and/or the extractant to flow through the flow paths are indicated by thick lines.

In the extraction method according to the second modification, the discharge valve 26 is set to the closed state at the initial stage after the start of the extraction method. Thus, the unprocessed raw material liquid stored in the separation container 6 is not discharged through the discharge pipe 24, and the extractant is not discharged through the discharge pipe 24 as illustrated in FIG. 21 until the height level of the upper surface of the extractant (heavy liquid) that has been introduced into the separation container 6 and separated after being subjected to the extraction process exceeds a preset specific height level.

Then, the amount of the extractant (heavy liquid) accumulated in the separation container 6 increases with the lapse of time, and the control unit 28 switches the discharge valve 26 to the open state at a timing when the control unit 28 determines that the height level of the upper surface of the heavy liquid accumulated in the separation container 6 (the height level of the boundary face between the light liquid and the heavy liquid) exceeds the specific height level based on the information acquired from the level meter 16. As a result, as illustrated in FIG. 22, the extractant (heavy liquid) is discharged from the inside of the separation container 6 to the outside of the interaction system 1 through the discharge pipe 24. Thus, in the second modification, while the raw material liquid circulating between the separation container 6 and the process flow paths 30 is repeatedly supplied to the process flow paths 30 and subjected to the extraction process, the extractant supplied to the process flow paths 30 is always the unused extractant, and the unused extractant supplied to the process flow paths 30 is used for the extraction process only once, and then the unused extractant is separated from the raw material liquid in the separation container 6 and discharged to the outside of the interaction system 1.

In the second modification, when the specific gravity of extractant is larger than the specific gravity of raw material liquid, the extraction process using the extractant and the raw material liquid can be performed, and an effect similar to that of the first modification can be obtained.

### (About Separation Container)

The separation container in the present invention needs to have at least a function of separating the received mixed fluid into the extractant and the raw material liquid, and does not necessarily function as a raw material liquid tank for storing the unprocessed raw material liquid besides the function of separating the mixed fluid into the extractant and the raw material liquid as in the first and second embodiments. For example, the interaction system according to the present invention may individually include a separation container that separates the mixed fluid into the extractant and the raw material liquid, and a raw material liquid tank that stores the unprocessed raw material liquid. Now described below are an interaction system 1 according to a third modification that is a further modification of the interaction system 1 according to the first modification and individually includes a separation container and a raw material liquid tank, and an interaction system 1 according to a fourth modification that is a further modification of the interaction system 1 according to the second modification and individually includes a separation container and a raw material liquid tank.

### (Third Modification)

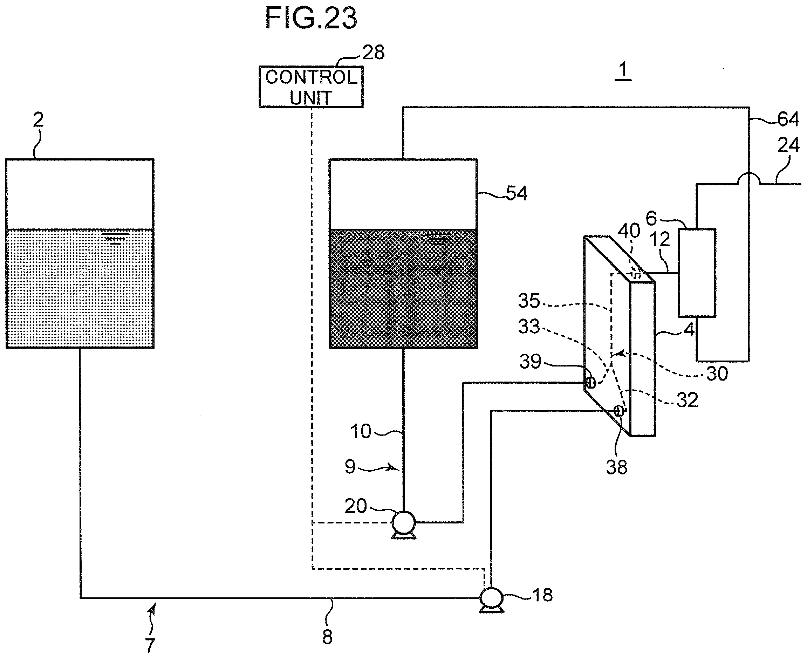

FIG. 23 illustrates an overall configuration of an interaction system 1 according to the third modification. As illustrated in FIG. 23, the interaction system 1 according to the third modification individually includes a separation container 6 that separates the mixed fluid flowing out the process flow paths 30 into the extractant and the raw material liquid, and a raw material liquid tank 54 that stores the unprocessed raw material liquid.

The separation container 6 is similar to the separation container 6 of the interaction system 1 of the third embodiment. The separation container 6 receives, through a connection pipe 12, the mixed fluid of the extractant and the raw material liquid that have been subjected to the extraction process and flown out from the process flow paths 30 to be discharged from the outlet 40. The separation container 6 is connected to the raw material liquid tank 54 via a raw material liquid lead-out pipe 64. The raw material liquid lead-out pipe 64 is connected to a region, where the raw material liquid separated as a heavy liquid is accumulated, of the separation container 6, and the raw material liquid separated in the separation container 6 as a heavy liquid is led out from the inside of the separation container 6 and guided to the raw material liquid tank 54. In the third modification, a discharge pipe 24 is connected to a region, where the separated extractant (light liquid) is accumulated, of the separation container 6 provided separately from the raw material liquid tank 54.

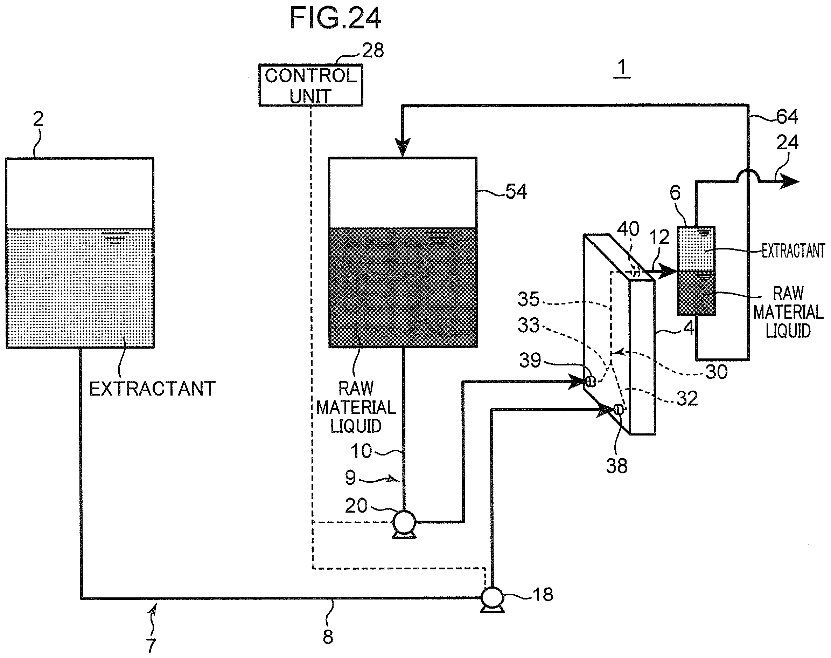

Next, an extraction method as an example of an interaction method using the interaction system 1 according to the third modification will be described with reference to FIG. 24. In FIG. 24, flow paths that allow the raw material liquid and/or the extractant to flow through the flow paths are indicated by thick lines.

In the extraction method according to the third modification, the unprocessed raw material liquid is fed to the raw material liquid tank 54, and then supplied from the raw material liquid tank 54 to the second inlet 39 of the interaction unit 4. As in the first modification, the unused extractant is supplied from the extractant tank 2 to the first inlet 38 of the interaction unit 4. Then, after the extraction process is performed in the process flow paths 30 of the interaction unit 4, the extractant and the raw material liquid are discharged from the outlet 40 of the interaction unit 4 and introduced into the separation container 6 through the connection pipe 12. The mixed fluid of the extractant and the raw material liquid introduced into the separation container 6 is vertically separated into the extractant as a light liquid and the raw material liquid as a heavy liquid. The extractant (light liquid) separated in the separation container 6 is discharged from the inside of the separation container 6 to the outside of the interaction system 1 through the discharge pipe 24. Meanwhile, the raw material liquid (heavy liquid) separated in the separation container 6 is led out to the raw material liquid lead-out pipe 64, and introduced into the raw material liquid tank 54 through the raw material liquid lead-out pipe 64. As a result, the raw material liquid circulates among the raw material liquid tank 54, the process flow paths 30 of the interaction unit 4, and the separation container 6.

In the third modification, an effect similar to that of the first modification can be obtained.

### (Fourth Modification)

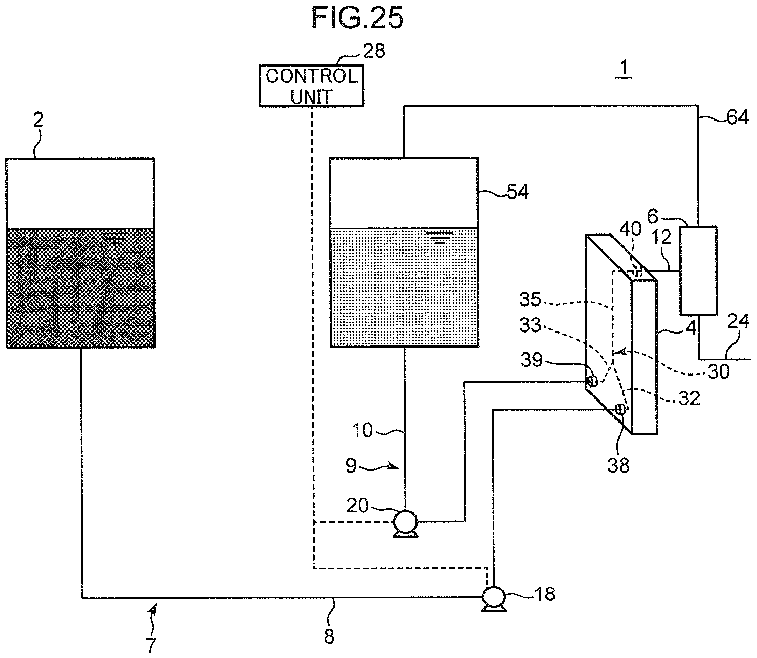

FIG. 25 illustrates an overall configuration of an interaction system 1 according to the fourth modification. As illustrated in FIG. 25, unlike the interaction system 1 according to the second modification, the interaction system 1 according to the fourth modification individually includes a separation container 6 that separates the mixed fluid flowing out from the process flow paths 30 into the extractant and the raw material liquid, a raw material liquid tank 54 that stores the unprocessed raw material liquid.

The separation container 6 receives, through a connection pipe 12, the mixed fluid of the extractant and the raw material liquid that have been subjected to the extraction process and flown out from the process flow paths 30 to be discharged from the outlet 40. A raw material liquid lead-out pipe 64 is connected to a region, where the separated raw material liquid as a light liquid is accumulated, of the separation container 6. The raw material liquid lead-out pipe 64 is connected to the raw material liquid tank 54, and leads out the raw material liquid separated in the separation container 6 as a light liquid from the inside of the separation container 6 to the raw material liquid tank 54. In the fourth modification, a discharge pipe 24 is connected to a region, where the separated extractant (heavy liquid) is accumulated, of the separation container 6 provided separately from the raw material liquid tank 54.

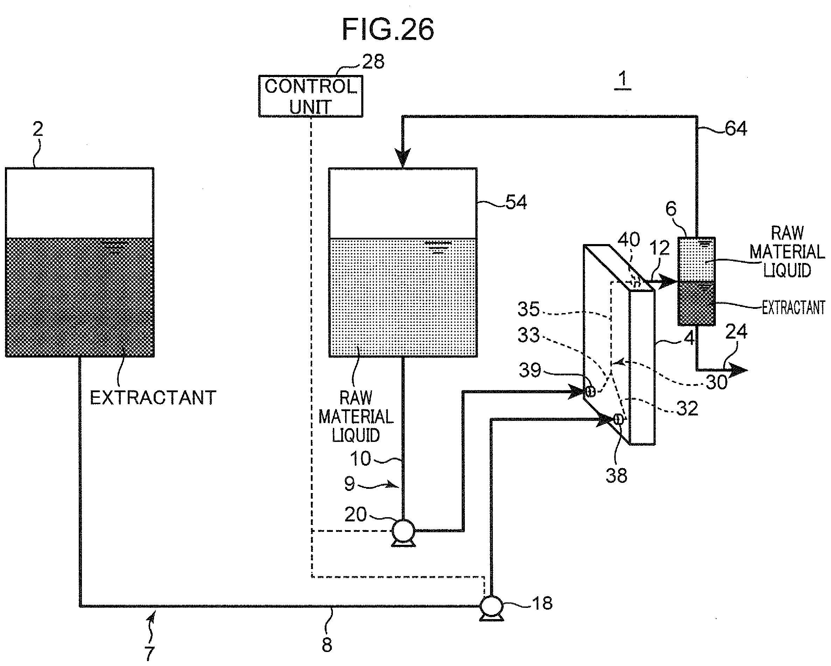

Next, an extraction method as an example of an interaction method using the interaction system 1 according to the fourth modification will be described with reference to FIG. 26. In FIG. 26, flow paths that allow the raw material liquid and/or the extractant to flow through the flow paths are indicated by thick lines.

In the extraction method according to the fourth modification, the unprocessed raw material liquid is fed to the raw material liquid tank 54, and then supplied from the raw material liquid tank 54 to the second inlet 39 of the interaction unit 4. The unused extractant is supplied from the extractant tank 2 to the first inlet 38 of the interaction unit 4. Then, after the extraction process is performed in the process flow paths 30 of the interaction unit 4, the extractant and the raw material liquid are discharged from the outlet 40 of the interaction unit 4 and introduced into the separation container 6 through the connection pipe 12. The mixed fluid of the extractant and the raw material liquid introduced into the separation container 6 is vertically separated into the raw material liquid as a light liquid and the extractant as a heavy liquid. The extractant (heavy liquid) separated in the separation container 6 is discharged from the inside of the separation container 6 to the outside of the interaction system 1 through the discharge pipe 24. Meanwhile, the raw material liquid (light liquid) separated in the separation container 6 is led out to the raw material liquid lead-out pipe 64, and introduced into the raw material liquid tank 54 through the raw material liquid lead-out pipe 64. As a result, the raw material liquid circulates among the raw material liquid tank 54, the process flow paths 30 of the interaction unit 4, and the separation container 6.

In the fourth modification, an effect similar to that of the second modification can be obtained.

In addition, in the interaction systems 1 according to the third and fourth modifications, such a device may be provided for keeping the height level of the boundary face between the extractant and the raw material liquid in the separation container 6 between the connection of the raw material liquid lead-out pipe 64 to the separation container 6 and the connection of the discharge pipe 24 to the separation container 6. For example, it may be configured that a level meter for detecting the height level of the boundary face is attached to the separation container 6, a flow adjusting valve is provided on one of the raw material liquid lead-out pipe 64 and the discharge pipe 24, and the control unit 28 adjusts the flow rate of the extractant or the raw material liquid discharged from the separation container 6 by controlling the opening degree of the flow adjusting valve based on the information on the height level of the boundary face received from the level meter to keep the height level of the boundary face between the connection of the raw material liquid lead-out pipe 64 and the connection of the discharge pipe 24. In this manner, even when the flow rate ratio of the extractant and the raw material liquid introduced into the separation container 6 fluctuates by some reason, such a problem can be prevented that the boundary face reaches the connection of the raw material liquid lead-out pipe 64 or the connection of the discharge pipe 24 to cause the extractant to flow to the raw material liquid tank 54 through the raw material liquid lead-out pipe 64 or the raw material liquid to be discharged to the outside of the interaction system 1 through the discharge pipe 24.

The first fluid and the second fluid in the present invention are not necessarily limited to liquid. Either or both of the first fluid and the second fluid may be gas.

The interaction between the first fluid and the second fluid in the present invention is not necessarily limited to an extraction process in which a specific component is extracted from a raw material liquid and transported into an extractant. For example, an absorption process in which a specific component in a target gas is absorbed into an absorbing liquid, and a process in which two fluids are brought into contact with each other to cause a chemical reaction are also included in the concept of interaction in the present invention. The interaction system and the interaction method according to the present invention are also applicable to such processes. In the case of the absorption process, the absorbing liquid corresponds to the first fluid in the present invention, and the target gas corresponds to the second fluid in the present invention. In a case of chemical reaction, one of two fluids that causes chemical reaction corresponds to the first fluid in the present invention, and the other corresponds to the second fluid in the present invention.

In the present invention, the timing of discharging the first fluid of which ability to cause interaction has decreased from the first fluid path (the timing of switching the discharge valve to the open state) may be, for example, a timing at which a detector provided at any position on the first fluid path to detect the concentration of a specific component in the first fluid detects, after the first fluid has started circulating and a predetermined period elapses thereafter, that the concentration of the specific component in the first fluid in the first fluid path has increased to a predetermined value.

Similarly, the timing of switching the circulation of the first fluid from among the first storage tank, the process flow paths, and the separation container to among the second storage tank, the process flow paths, and the separation container and vice versa may be a timing at which the detector detects that the concentration of the specific component in the circulating first fluid has increased to a predetermined value.

In each of the embodiments and the modifications described above, the first inlet through which the extractant is introduced and the second inlet through which the raw material liquid is introduced are provided in the interaction unit as inlets to the process flow paths, the first introduction path of the process flow paths is connected to the first inlet, and the second introduction path of the process flow paths is connected to the second inlet. However, a single inlet may be provided as the inlet to the process flow paths in the interaction unit, and the upstream ends of the process flow paths may be connected to the inlet. In this case, it may be configured that the extractant (first fluid) and the raw material liquid (second fluid) merge outside the interaction unit, and the merged extractant (first fluid) and raw material liquid (second fluid) are introduced into the process flow paths through a single inlet.

### [Summary of Embodiments and Modifications]

The embodiments and the modifications are summarized as follows.

The interaction system according to the embodiments and the modifications are interaction systems that cause interaction between the first fluid and the second fluid. This interaction system includes an interaction unit internally including a process flow path that allows the first fluid and the second fluid to flow through the process flow path so as to come into contact and interact with each other, a separation container connected to an outlet of the process flow path so as to receive a mixed fluid of the first fluid and the second fluid discharged from the outlet of the process flow path to retain the received mixed fluid to separate the mixed fluid into the first fluid and the second fluid, a first fluid supply device configured to supply the first fluid to an inlet of the process flow path, a second fluid path connecting a region of the separation container and the inlet of the process flow path so as to guide the second fluid separated in the separation container to the inlet of the process flow path, the region of the separation container being a region where the separated second fluid is accumulated, and a second fluid feed pump provided on the second fluid path to send the second fluid separated in the separation container from the separation container to the inlet of the process flow path.

In this interaction system, since the second fluid can be circulated between the separation container and the process flow paths in the interaction unit to repeatedly cause the interaction between the second fluid and the first fluid in the process flow paths in the interaction unit, it is possible to continuously perform the interaction process a plurality of times in the system while suppressing the interaction system from becoming complicated and reducing the lifting height and the required power of the second fluid feed pump that supplies the second fluid to the process flow paths of the interaction unit.

Specifically, in this interaction system, the separation container is connected to the outlet of the process flow paths so as to receive the mixed fluid of the first fluid and the second fluid discharged from the outlet of the process flow paths in the interaction unit, the second fluid path connects the region, where the separated second fluid is accumulated, of the separation container and the inlet of the process flow paths so as to guide the second fluid separated in the separation container to the inlet of the process flow paths, and the second fluid feed pump provided on the second fluid path sends the second fluid separated in the separation container to the inlet of the process flow paths, so that, after the interaction has been performed in the process flow paths in the interaction unit, the mixed fluid of the first fluid and the second fluid discharged from the outlet of the process flow paths can be separated into the first fluid and the second fluid in the separation container, and the separated second fluid can be returned to the inlet of the process flow paths through the second fluid path. Thus, the second fluid can be circulated between the separation container and the process flow paths in the interaction unit, and the interaction between the second fluid and the first fluid supplied to the process flow paths by the first fluid supply device can be repeatedly performed in the process flow paths. Accordingly, the interaction process can be continuously performed a plurality of times in the interaction system without increasing the number of interaction units, thereby suppressing the interaction system from becoming complicated.

Moreover, in this interaction system, since the second fluid feed pump needs to have a lifting height only necessary for flowing the second fluid to the process flow paths in one interaction unit, the lifting height of the second fluid feed pump can be reduced as compared with a case in which a fluid is sequentially flown to the flow paths of a plurality stages of interaction units as in a conventional interaction system. Accordingly, the required power of the second fluid feed pump can also be reduced.

In addition, in this interaction system, the number of times the interaction process between the first fluid and the second fluid is performed in the process flow paths of the interaction unit can be changed by changing the number of times the second fluid is circulated between the separation container and the process flow paths of the interaction unit. Thus, this interaction system also has an effect that the number of times the interaction process is performed can be changed without changing the configuration of the interaction system.

The first fluid supply device may include: a first fluid path that connects a region of the separation container and the inlet of the process flow path so as to guide the first fluid separated in the separation container to the inlet of the process flow path, the region of the separation container being a region where the separated first fluid is accumulated; and a first fluid feed pump provided on the first fluid path to send the first fluid separated in the separation container from the separation container to the inlet of the process flow path.

According to this configuration, not only the second fluid but also the first fluid can be circulated between the separation container and the process flow paths of the interaction unit, and the interaction between the circulating first fluid and the second fluid can be repeatedly performed in the process flow paths. In addition, in this configuration, the first fluid feed pump needs to have a lifting height only necessary for flowing the first fluid to the process flow paths in one interaction unit, so that the lifting height of the first fluid feed pump can be reduced. Accordingly, the required power of the first fluid feed pump can also be reduced.

It is preferable that the interaction system further includes a discharge unit connected to the first fluid path, the discharge unit being configured to be switchable between a discharge state of discharging the first fluid from the first fluid path to an outside and a discharge prevention state of preventing the first fluid from being discharged, in which the first fluid supply device further includes a first fluid tank connected to the first fluid path, the first fluid tank being configured to store an unused first fluid that is the first fluid having not yet used for the interaction, and a supply switching device provided on the first fluid path, the supply switching device being configured to be switchable between an unused fluid supply state and a separated fluid supply state, the unused fluid supply state being a state of allowing the unused first fluid to flow from the first fluid tank to the inlet of the process flow path through the first fluid path and preventing the first fluid separated in the separation container from flowing from the separation container to the inlet of the process flow path through the first fluid path, the separated fluid supply state being a state of allowing the first fluid separated in the separation container to flow from the separation container to the inlet of the process flow path through the first fluid path and preventing the unused first fluid from flowing from the first fluid tank to the inlet of the process flow path through the first fluid path.

According to this configuration, when the efficiency of the interaction process has decreased as a result of a decrease in the ability of the first fluid to cause the interaction due to the repeated interaction of the first fluid with the second fluid in the process flow paths of the interaction unit, the first fluid can be discharged, and instead, the unused first fluid having a high ability to cause the interaction can be supplied to the process flow paths to recover the efficiency of the interaction process.

Specifically, in this configuration, since the discharge unit, that is configured to switch between the discharge state of discharging the first fluid from the first fluid path to the outside and the discharge prevention state of preventing the first fluid from being discharged, is connected to the first fluid path, when the ability of the first fluid to cause the interaction has decreased, the discharge unit can be switched from the discharge prevention state to the discharge state to discharge the first fluid of which ability to cause the interaction has decreased from the first fluid path. In this configuration, the first fluid tank that stores the unused first fluid is connected to the first fluid path, and the supply switching device configured to be switchable between the unused fluid supply state and the separated fluid supply state is provided on the first fluid path, so that, after the first fluid of which ability to cause the interaction has decreased as described above is discharged from the first fluid path, the supply switching device can be switched from the separated fluid supply state to the unused fluid supply state to supply the unused first fluid having a high ability to cause the interaction from the first fluid tank to the process flow paths of the interaction unit. Thus, the efficiency of the interaction process between the first fluid and the second fluid in the process flow paths can be recovered.

It is preferable that the first fluid path includes a first storage tank and a second storage tank each capable of storing the first fluid led out from the separation container to the first fluid path, the first fluid supply device further includes an inflow switching device provided in an upstream of the first storage tank and the second storage tank on the first fluid path, the inflow switching device being configured to switch between a first inflow allowing state and a second inflow allowing state, the first inflow allowing state being a state of allowing the first fluid led out from the separation container to flow into the first storage tank and preventing the first fluid led out from the separation container from flowing into the second storage tank, the second inflow allowing state being a state of allowing the first fluid led out from the separation container to flow into the second storage tank and preventing the first fluid led out from the separation container from flowing into the first storage tank, and a supply switching device provided in a downstream of the first storage tank and the second storage tank on the first fluid path, the supply switching device being configured to enter a first supply state when the inflow switching device is in the first inflow allowing state and to enter a second supply state when the inflow switching device is in the second inflow allowing state, the first supply state being a state of allowing the first fluid to be sent from the first storage tank to the inlet of the process flow path by the first fluid feed pump and preventing the first fluid from being sent from the second storage tank to the inlet of the process flow path, the second supply state being a state of allowing the first fluid to be sent from the second storage tank to the inlet of the process flow path by the first fluid feed pump and preventing the first fluid from being sent from the first storage tank to the inlet of the process flow path, and the interaction system further includes a first discharge unit connected to the first storage tank, the first discharge unit being configured to be switchable between a first discharge state and a first discharge prevention state, the first discharge state being a state of discharging the first fluid from the first storage tank to an outside of the interaction system, the first discharge prevention state being a state of preventing the first fluid from being discharged from the first storage tank to the outside of the interaction system, and a second discharge unit connected to the second storage tank, the second discharge unit being configured to be switchable between a second discharge state and a second discharge prevention state, the second discharge state being a state of discharging the first fluid from the second storage tank to the outside of the interaction system, the second discharge prevention state being a state of preventing the first fluid from being discharged from the second storage tank to the outside of the interaction system.

According to this configuration, when the efficiency of the interaction process has decreased as a result of a decrease in the ability of the first fluid to cause the interaction due to the repeated interaction of the first fluid with the second fluid in the process flow paths of the interaction unit, the unused first fluid having a high ability to cause the interaction can be supplied to the process flow paths to recover the efficiency of the interaction process, and the interaction process can be performed without being interrupted when the first fluid of which ability to cause the interaction has decreased is discharged from the first and second storage tanks and replaced with the unused first fluid.

Specifically, in this configuration, the first fluid path includes the first storage tank and the second storage tank each capable of storing the first fluid led out from the separation container to the first fluid path, the inflow switching device configured to switch between the first inflow allowing state and the second inflow allowing state is provided in the upstream of the first storage tank and the second storage tank on the first fluid path, and the supply switching device that enters the first supply state when the inflow switching device is in the first inflow allowing state and enters the second supply state when the inflow switching device is in the second inflow allowing state is provided in the downstream of the first storage tank and the second storage tank on the first fluid path. Thus, when the inflow switching device is in the first inflow allowing state, the supply switching device is in the first supply state, and the first fluid is circulating among the first storage tank, the process flow paths, and the separation container, the second storage tank is fed with the unused first fluid. When the ability of the circulating first fluid to cause the interaction has decreased due to the repeated interaction in the process flow paths, the inflow switching device is switched to the second inflow allowing state and the supply switching device is switched to the second supply state, whereby the unused first fluid stored in the second storage tank can be supplied to the process flow paths to recover the efficiency of the interaction process. In addition, the first storage tank is fed with the unused first fluid when the first fluid is circulating among the second storage tank, the process flow paths, and the separation container. When the ability of the circulating first fluid to cause the interaction has decreased, the inflow switching device is switched to the first inflow allowing state and the supply switching device is switched to the second supply state, whereby the unused first fluid stored in the first storage tank can be supplied to the process flow paths to recover the efficiency of the interaction process.

Moreover, in this configuration, the first discharge unit configured to be switchable between the first discharge state and the first discharge prevention state is connected to the first storage tank, and the second discharge unit configured to be switchable between the second discharge state and the second discharge prevention state is connected to the second storage tank. Thus, when the ability of the first fluid to cause the interaction has decreased while the first fluid circulates among the first storage tank, the process flow paths, and the separation container, the first fluid of which ability to cause the interaction has decreased can be discharged from the first storage tank by switching the first discharge unit to the first discharge state, and instead, the first fluid can be replaced by feeding the unused first fluid to the first storage tank. This replacement can be performed without interrupting the interaction process by supplying the unused first fluid from the second storage tank to the process flow paths as described above. In addition, when the ability of the first fluid to cause the interaction has decreased while the first fluid circulates among the second storage tank, the process flow paths, and the separation container, the first fluid of which ability to cause the interaction has decreased can be discharged from the second storage tank by switching the second discharge unit to the second discharge state, and instead, the first fluid can be replaced by feeding the unused first fluid to the second storage tank. This replacement can be performed without interrupting the interaction process by supplying the unused first fluid from the first storage tank to the process flow paths as described above.

The interaction system may further include a first fluid discharge path connected to a region of the separation container to guide the separated first fluid from an inside of the separation container to the outside of the interaction system, the region of the separation container being a region where the separated first fluid is accumulated, in which the first fluid supply device may include a first fluid tank that stores an unused first fluid that is the first fluid having not yet used for the interaction, a first fluid supply path connecting the first fluid tank and the inlet of the process flow path so as to guide the unused first fluid from the first fluid tank to the inlet of the process flow path, and a first fluid feed pump provided on the first fluid supply path to send the unused first fluid from the first fluid tank to the inlet of the process flow path.

According to this configuration, the unused first fluid having a high ability to cause the interaction can be sent from the first fluid tank to the process flow paths by the first fluid feed pump, and the efficiency of the interaction process can be kept high.

Interaction methods according to the embodiments and the modifications are interaction methods for causing an interaction between a first fluid and a second fluid. This interaction method includes causing the first fluid and the second fluid to flow in a contact state with each other through a process flow path in an interaction unit to cause the interaction between the first fluid and the second fluid, introducing a mixed fluid of the first fluid and the second fluid flowing out from an outlet of the process flow path into a separation container, and then retaining the mixed fluid in the separation container to separate the mixed fluid into the first fluid and the second fluid, supplying the first fluid to an inlet of the process flow path, and sending the second fluid separated in the separation container to the inlet of the process flow path through a second fluid path by a second fluid feed pump provided on the second fluid path connecting a region of the separation container and the inlet of the process flow path, the region of the separation container being a region where the separated second fluid is accumulated.

In this interaction method, for a reason similar to the reason described for the interaction system, the interaction process can be continuously performed a plurality of times while suppressing the interaction system that performs the interaction method from becoming complicated and reducing the lifting height and the required power of the second fluid feed pump that supplies the second fluid to the process flow paths of the interaction unit. In addition, this interaction method also has an effect that the number of times the interaction process is performed can be changed without changing the configuration of the interaction system.

The supplying the first fluid to the inlet of the process flow path may include sending the first fluid separated in the separation container to the inlet of the process flow path through a first fluid path by a first fluid feed pump provided on the first fluid path connecting a region of the separation container and the inlet of the process flow path, the region of the separation container being a region where the separated first fluid is accumulated.

In this interaction method, not only the second fluid but also the first fluid can be circulated between the separation container and the process flow paths of the interaction unit, and the interaction between the circulating first fluid and the second fluid can be repeatedly performed in the process flow paths. In addition, the first fluid feed pump needs to have a lifting height only necessary for flowing the first fluid to the process flow paths in one interaction unit, so that the lifting height of the first fluid feed pump can be reduced. Accordingly, the required power of the first fluid feed pump can also be reduced.

It is preferable that the interaction method further includes discharging the first fluid from the first fluid path to an outside at a timing when a predetermined period elapses after the first fluid separated in the separation container is sent to the inlet of the process flow path by the first fluid feed pump so that circulation of the first fluid between the separation container and the process flow path is started, and, after discharging the first fluid from the first fluid path, supplying an unused first fluid to the inlet of the process flow path through the first fluid path and causing the supplied unused first fluid and the second fluid to flow in a contact state with each other through the process flow path to cause the interaction between the supplied unused first fluid and the second fluid, the unused first fluid being the first fluid having not yet used for the interaction.

In this interaction method, when the predetermined period elapses after the first fluid has started circulating between the separation container and the process flow paths, and the efficiency of the interaction process has decreased as a result of a decrease in the ability of the first fluid to cause the interaction due to the repeated interaction of the first fluid with the second fluid in the process flow paths, the first fluid can be discharged, and instead, the unused first fluid having a high ability to cause the interaction can be supplied to the process flow paths to recover the efficiency of the interaction process.

It is further preferable that the first fluid path includes a first storage tank and a second storage tank each capable of storing the first fluid, and the interaction method further includes feeding an unused first fluid to the second storage tank during a period in which the first fluid stored in the first storage tank is sent to the inlet of the process flow path by the first fluid feed pump and the first fluid circulates among the first storage tank, the process flow path, and the separation container, the unused first fluid being the first fluid having not yet used for the interaction, switching a supply source of the first fluid to be sent to the inlet of the process flow path by the first fluid feed pump to the second storage tank to cause the first fluid to circulate among the second storage tank, the process flow path, and the separation container while replacing the first fluid in the first storage tank with the unused first fluid, the switching and the replacing being performed at a timing when a predetermined period elapses after the first fluid has started circulating among the first storage tank, the process flow path, and the separation container, and switching the supply source of the first fluid to be sent to the inlet of the process flow path by the first fluid feed pump to the first storage tank to cause the first fluid to circulate among the first storage tank, the process flow path, and the separation container while replacing the first fluid in the second storage tank with the unused first fluid, the switching and the replacing being performed at a timing when a predetermined period elapses after the first fluid has started circulating among the second storage tank, the process flow path, and the separation container.

In this interaction method, when the predetermined period elapses after the first fluid has started circulating among the first storage tank, the process flow paths, and the separation container, and the efficiency of the interaction process has decreased as a result of a decrease in the ability of the first fluid to cause the interaction due to the repeated interaction of the first fluid with the second fluid in the process flow paths, the unused first fluid having a high ability to cause the interaction can be supplied to the process flow paths to recover the efficiency of the interaction process, and the interaction process can be performed without being interrupted when the first fluid of which ability to cause the interaction has decreased is discharged from the first and second storage tanks and replaced with the unused first fluid.

Specifically, in this interaction method, when the predetermined period elapses after the first fluid has started circulating among the first storage tank, the process flow paths, and the separation container, and the ability of the first fluid to cause the interaction has decreased, the supply source of the first fluid to be sent to the inlet of the process flow paths is switched to the second storage tank, and the unused first fluid stored in the second storage tank can be circulated among the second storage tank, the process flow paths, and the separation container, so that the efficiency of the interaction process can be recovered. In addition, when the predetermined period elapses after the first fluid has started circulating among the second storage tank, the process flow paths, and the separation container, and the ability of the first fluid to cause the interaction has decreased, the supply source of the first fluid to be sent to the inlet of the process flow paths is switched to the first storage tank, and the unused first fluid stored in the first storage tank can be circulated among the first storage tank, the process flow paths, and the separation container, so that the efficiency of the interaction process can be recovered. Moreover, in this interaction method, when the first fluid in the first storage tank and of which ability to cause the interaction has decreased is replaced with the unused first fluid, the interaction process in the process flow paths can be performed by circulating the first fluid among the second storage tank, the process flow paths, and the separation container, so that the interaction process is not interrupted for replacing the first fluid. In addition, when the first fluid in the second storage tank and of which ability to cause the interaction has decreased is replaced with the unused first fluid, the interaction process in the process flow paths can be performed by circulating the first fluid among the first storage tank, the process flow paths, and the separation container, and thus, in this case as well, the interaction process is not interrupted for replacing the first fluid.

The supplying of the first fluid to the inlet of the process flow path may include sending an unused first fluid to the inlet of the process flow path from a first fluid tank that is connected to the inlet of the process flow path via a first fluid supply path, the unused first fluid being the first fluid having not yet used for the interaction, and the interaction method may further include discharging the first fluid separated in the separation container to an outside.

In this interaction method, the unused first fluid having a high ability to cause the interaction is sent from the first fluid tank to the process flow paths by the first fluid feed pump, whereby the efficiency of the interaction process can be kept high.

According to the embodiments and the modifications described above, there are provided an interaction system capable of continuously performing an interaction process a plurality of times in the system while suppressing the interaction system from becoming complicated and reducing the lifting height and the required power of a pump for supplying a fluid to an interaction unit, and capable of changing the number of times the interaction process is performed without changing the configuration of the interaction system, and an interaction method using the interaction system.

## Claims

1. An interaction system for causing an interaction between a first fluid and a second fluid, the interaction system comprising:
an interaction unit internally including a process flow path that allows the first fluid and the second fluid to flow through the process flow path so as to come into contact and interact with each other;
a separation container connected to an outlet of the process flow path so as to receive a mixed fluid of the first fluid and the second fluid discharged from the outlet of the process flow path to retain the received mixed fluid to separate the mixed fluid into the first fluid and the second fluid;
a first fluid supply device configured to supply the first fluid to an inlet of the process flow path;
a second fluid path connecting a region of the separation container and the inlet of the process flow path so as to guide the second fluid separated in the separation container to the inlet of the process flow path, the region of the separation container being a region where the separated second fluid is accumulated; and
a second fluid feed pump provided on the second fluid path to send the second fluid separated in the separation container from the separation container to the inlet of the process flow path.

2. The interaction system according to claim 1, wherein
the first fluid supply device includes: a first fluid path that connects a region of the separation container and the inlet of the process flow path so as to guide the first fluid separated in the separation container to the inlet of the process flow path, the region of the separation container being a region where the separated first fluid is accumulated; and a first fluid feed pump provided on the first fluid path to send the first fluid separated in the separation container from the separation container to the inlet of the process flow path.

3. The interaction system according to claim 2, further comprising
a discharge unit connected to the first fluid path, the discharge unit being configured to be switchable between a discharge state of discharging the first fluid from the first fluid path to an outside and a discharge prevention state of preventing the first fluid from being discharged,
wherein the first fluid supply device further includes:
a first fluid tank connected to the first fluid path, the first fluid tank being configured to store an unused first fluid that is the first fluid having not yet used for the interaction; and
a supply switching device provided on the first fluid path, the supply switching device being configured to be switchable between an unused fluid supply state and a separated fluid supply state, the unused fluid supply state being a state of allowing the unused first fluid to flow from the first fluid tank to the inlet of the process flow path through the first fluid path and preventing the first fluid separated in the separation container from flowing from the separation container to the inlet of the process flow path through the first fluid path, the separated fluid supply state being a state of allowing the first fluid separated in the separation container to flow from the separation container to the inlet of the process flow path through the first fluid path and preventing the unused first fluid from flowing from the first fluid tank to the inlet of the process flow path through the first fluid path.

4. The interaction system according to claim 2, wherein
the first fluid path includes a first storage tank and a second storage tank each capable of storing the first fluid led out from the separation container to the first fluid path,
the first fluid supply device further includes:
an inflow switching device provided in an upstream of the first storage tank and the second storage tank on the first fluid path, the inflow switching device being configured to switch between a first inflow allowing state and a second inflow allowing state, the first inflow allowing state being a state of allowing the first fluid led out from the separation container to flow into the first storage tank and preventing the first fluid led out from the separation container from flowing into the second storage tank, the second inflow allowing state being a state of allowing the first fluid led out from the separation container to flow into the second storage tank and preventing the first fluid led out from the separation container from flowing into the first storage tank; and
a supply switching device provided in a downstream of the first storage tank and the second storage tank on the first fluid path, the supply switching device being configured to enter a first supply state when the inflow switching device is in the first inflow allowing state and to enter a second supply state when the inflow switching device is in the second inflow allowing state, the first supply state being a state of allowing the first fluid to be sent from the first storage tank to the inlet of the process flow path by the first fluid feed pump and preventing the first fluid from being sent from the second storage tank to the inlet of the process flow path, the second supply state being a state of allowing the first fluid to be sent from the second storage tank to the inlet of the process flow path by the first fluid feed pump and preventing the first fluid from being sent from the first storage tank to the inlet of the process flow path, and
the interaction system further includes:
a first discharge unit connected to the first storage tank, the first discharge unit being configured to be switchable between a first discharge state and a first discharge prevention state, the first discharge state being a state of discharging the first fluid from the first storage tank to an outside of the interaction system, the first discharge prevention state being a state of preventing the first fluid from being discharged from the first storage tank to the outside of the interaction system; and
a second discharge unit connected to the second storage tank, the second discharge unit being configured to be switchable between a second discharge state and a second discharge prevention state, the second discharge state being a state of discharging the first fluid from the second storage tank to the outside of the interaction system, the second discharge prevention state being a state of preventing the first fluid from being discharged from the second storage tank to the outside of the interaction system.

5. The interaction system according to claim 1, further comprising
a first fluid discharge path connected to a region of the separation container to guide the separated first fluid from an inside of the separation container to the outside of the interaction system, the region of the separation container being a region where the separated first fluid is accumulated,
wherein the first fluid supply device includes:
a first fluid tank that stores an unused first fluid that is the first fluid having not yet used for the interaction;
a first fluid supply path connecting the first fluid tank and the inlet of the process flow path so as to guide the unused first fluid from the first fluid tank to the inlet of the process flow path; and
a first fluid feed pump provided on the first fluid supply path to send the unused first fluid from the first fluid tank to the inlet of the process flow path.

6. An interaction method for causing an interaction between a first fluid and a second fluid, the interaction method comprising:
causing the first fluid and the second fluid to flow in a contact state with each other through a process flow path in an interaction unit to cause the interaction between the first fluid and the second fluid;
introducing a mixed fluid of the first fluid and the second fluid flowing out from an outlet of the process flow path into a separation container, and then retaining the mixed fluid in the separation container to separate the mixed fluid into the first fluid and the second fluid;
supplying the first fluid to an inlet of the process flow path; and
sending the second fluid separated in the separation container to the inlet of the process flow path through a second fluid path by a second fluid feed pump provided on the second fluid path connecting a region of the separation container and the inlet of the process flow path, the region of the separation container being a region where the separated second fluid is accumulated.

7. The interaction method according to claim 6, wherein
the supplying the first fluid to the inlet of the process flow path includes sending the first fluid separated in the separation container to the inlet of the process flow path through a first fluid path by a first fluid feed pump provided on the first fluid path connecting a region of the separation container and the inlet of the process flow path, the region of the separation container being a region where the separated first fluid is accumulated.

8. The interaction method according to claim 7, further comprising:
discharging the first fluid from the first fluid path to an outside at a timing when a predetermined period elapses after the first fluid separated in the separation container is sent to the inlet of the process flow path by the first fluid feed pump so that circulation of the first fluid between the separation container and the process flow path is started; and
after discharging the first fluid from the first fluid path, supplying an unused first fluid to the inlet of the process flow path through the first fluid path and causing the supplied unused first fluid and the second fluid to flow in a contact state with each other through the process flow path to cause the interaction between the supplied unused first fluid and the second fluid, the unused first fluid being the first fluid having not yet used for the interaction.

9. The interaction method according to claim 7, wherein
the first fluid path includes a first storage tank and a second storage tank each capable of storing the first fluid, and
the interaction method further comprises:
feeding an unused first fluid to the second storage tank during a period in which the first fluid stored in the first storage tank is sent to the inlet of the process flow path by the first fluid feed pump and the first fluid circulates among the first storage tank, the process flow path, and the separation container, the unused first fluid being the first fluid having not yet used for the interaction;
switching a supply source of the first fluid to be sent to the inlet of the process flow path by the first fluid feed pump to the second storage tank to cause the first fluid to circulate among the second storage tank, the process flow path, and the separation container while replacing the first fluid in the first storage tank with the unused first fluid, the switching and the replacing being performed at a timing when a predetermined period elapses after the first fluid has started circulating among the first storage tank, the process flow path, and the separation container; and
switching the supply source of the first fluid to be sent to the inlet of the process flow path by the first fluid feed pump to the first storage tank to cause the first fluid to circulate among the first storage tank, the process flow path, and the separation container while replacing the first fluid in the second storage tank with the unused first fluid, the switching and the replacing being performed at a timing when a predetermined period elapses after the first fluid has started circulating among the second storage tank, the process flow path, and the separation container.

10. The interaction method according to claim 6, wherein
the supplying of the first fluid to the inlet of the process flow path includes sending an unused first fluid to the inlet of the process flow path from a first fluid tank that is connected to the inlet of the process flow path via a first fluid supply path, the unused first fluid being the first fluid having not yet used for the interaction, and
the interaction method further includes discharging the first fluid separated in the separation container to an outside.
